(19) **Europäisches Patentamt**
**European Patent Office**
**Office européen des brevets**

(11) **EP 2 437 496 A2**

## (12) EUROPEAN PATENT APPLICATION
published in accordance with Art. 153(4) EPC

(43) Date of publication:
04.04.2012 Bulletin 2012/14

(51) Int Cl.:
*H04N 7/18* (2006.01)  *H04N 5/225* (2006.01)

(21) Application number: 10780771.1

(22) Date of filing: 26.05.2010

(86) International application number:
PCT/KR2010/003310

(87) International publication number:
WO 2010/137860 (02.12.2010 Gazette 2010/48)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 29.05.2009   KR 20090047275
11.08.2009   KR 20090073660
10.09.2009   KR 20090085269
31.12.2009   KR 20090135157

(71) Applicant: Youngkook Electronics, Co., Ltd.
Seoul 137-070 (KR)

(72) Inventors:
• KIM, Bae Hoon
Seoul 137-900 (KR)
• LEE, Jee hwan
Gyonggi-do 423-012 (KR)

(74) Representative: Hocking, Adrian Niall
Albright Patents LLP
Eagle Tower
Montpellier Drive
Cheltenham
GL50 1TA (GB)

(54) **INTELLIGENT MONITORING CAMERA APPARATUS AND IMAGE MONITORING SYSTEM IMPLEMENTING SAME**

(57) The present invention relates to a monitoring camera apparatus which directly detects motion in an image to control the pan/tilt/zoom of a centralized monitoring camera, and which transmits a wide area monitoring image and a centralized monitoring image together to a control device in a remote place, and also relates a remote monitoring system using same. The monitoring camera apparatus acquires monitoring images to be displayed in a remote control device (40), and controls a centralized monitoring imaging unit (20) without the assistance of the remote control device (40). The monitoring camera apparatus comprises a wide angle imaging unit (110), a control and signal-processing unit (120), and signal-transmitting units (160, 162). The wide angle imaging unit (110) acquires a wide angle image for a monitoring area. The control and signal-processing unit (120) detects the location of a moving object from the wide angle image, generates a control signal corresponding to the location information of the moving object to control the centralized monitoring imaging unit (20) to photograph the moving object, and receives the centralized monitoring image acquired by the centralized monitoring imaging unit (20). The signal-transmitting units (160, 162) transmit the monitoring image containing the centralized monitoring image to the remote control device (40).

*FIG. 1*

EP 2 437 496 A2

## Description

## Technical Field

The present invention relates to a camera apparatus, and in particular, to a camera apparatus used for a Closed Circuit Television (CCTV) type monitoring system. More particularly, the present invention relates to a monitoring system using a camera apparatus.

## Background Technology

Generally, a CCTV monitoring system includes a camera for photographing a target area and a remote monitoring unit that displays an image photographed by the camera on a monitor and stores the image in a storage device. The operation of the camera is controlled by the remote monitoring unit, and acquired images are transmitted to the remote monitoring unit through a coaxial cable in a form of a composite video signal appropriate for, e.g., NTSC, PAL, or SECAM standards, or are transmitted in a form of a component video signal or a compressed video signal.

Although various types of monitoring cameras are being used, one of the most-widely used cameras is a fixed camera whose focal distance is uniformly fixed. However, the fixed camera has a limitation in that the viewing angle is narrow, and the photographable range is limited to an extremely narrow area in a monitoring direction primarily set by a user.

Also, Pan-Tilt-Zoom (hereinafter, referred to as PTZ) cameras that allow a horizontal rotation (i.e., panning), a vertical rotation (i.e., tilting), and zoom-in/zoom-out are being widely used. Since the horizontal rotation, the vertical rotation, and the zoon-in/zoon-out of PTZ cameras can be remotely controlled, the monitoring area can be changed, and a specific target can be tracked and intensively monitored under instructions from the remote monitoring unit. However, since the PTZ cameras are also limited in camera angle, there exists a blind spot that is not photographable even though it varies in space according to the direction the camera is currently facing. Particularly, when tracking a specific target with the lens zoomed-in and the panning and tilting mechanisms driven, it becomes impossible to monitor the areas other than the target surrounding and, consequently, the blind spot becomes enlarged.

In order to expand a monitoring range, a method of using a panorama camera (also referred to as a wide-angle camera or an omnidirectional camera) using a wide-angle lens, such as a fish-eye lens, has been proposed. Examples of this method include Korean Patent No. 663,483, entitled "Apparatus and Method of Unmanned Surveillance Using Omni-Directional Camera," and Korean Patent Publication No. 10-2009-0015311, entitled "Video Surveillance System." However, since an image photographed by a fish-eye lens camera is circular, the entire image is severely distorted, and objects in the peripheral region of the image are difficult to recognize. Furthermore, due to curvilinear characteristics of the image, it is even more difficult to track and monitor a moving object. Accordingly, while a fish-eye camera is useful to observe overall situation, it is not suitable for intensive surveillance of a moving object.

Accordingly, in recent years, surveillance systems combining a wide-area monitoring camera and a centralized monitoring camera are being spread. For example, Korean Patent Publication No. 2005-0103597, entitled "Monitoring System Using Panorama Video Image and Controlling Method Thereof," discloses a system that selects a specific portion from a panorama image acquired by a plurality of component cameras and controls a PTZ camera (3) to photograph the selected portion. In this system, surroundings can be omnidirectionally monitored by a panorama camera. Also, if motion is detected, the PTZ camera can track and monitor a moving object.

In a typical monitoring system combining a panorama camera and a PTZ camera, the PTZ camera is totally controlled by a remote monitoring unit through user's manipulation of an input device or execution of a computer program. In this case, if the PTZ camera is manually controlled by an operator, there is a limitation in that sufficient manpower is continuously needed. On the other hand, if the PTZ camera is controlled by motion detection software and/or hardware, the load of data processing in the remote monitoring unit increases. Particularly, when the system includes a plurality of cameras, the computing load of the remote monitoring unit increases further.

Furthermore, in the case of an analog type of image transmission, since image signals acquired by the respective cameras are transmitted to a remote monitoring unit through individual lines, the cost for line installation and maintenance increases proportional to the number of cameras used. In this case, even under a condition where the line bandwidth is sufficiently wide, in order to transmit image signals acquired from various cameras through a smaller number of lines than the number of cameras, a separate multiplexer has to be installed at a place where the lines converge, and a demultiplexer has to be provided in the remote monitoring unit and, accordingly, the complexity of the system increases. In order to obviate the complexity of the system, image signals from different cameras may be transmitted as one image by an image mixer. However, since images from different cameras are combined into one screen, images from the respective cameras are reduced to cause reduction of the image quality. Also, when a user selects only necessary images and magnifies them on the whole screen to view, images other than the selected images cannot be monitored.

Also, in the case of a network type of image transmission, since images are converted into network data to be transmitted to a remote monitoring unit, the communication bandwidth and the computing load for processing the images increase as the number of cameras increases.

On the other hand, when a monitoring system including only PTZ cameras is intended to be switched to a monitoring system combining a panorama camera and a PTZ camera, previous apparatuses may not be easily utilized. The specifications of cameras may be changed by system switching. For example, the configuration of a system may be changed from analog type to network type. When the interoperability is reduced due to a difference of the configuration of the system, the PTZ camera cannot be utilized, and previous equipment has to be replaced according to newly added cameras. Furthermore, a computing load in control of the PTZ camera and image transmission by a network type may require replacement of a control unit, for example, PC constituting a remote monitoring unit.

**Detailed Description of Invention**

Technical Problem

Accordingly, the present disclosure provides a monitoring camera apparatus that can control panning/tilting/zooming of a centralized monitoring camera on its own by directly detecting a motion in an image, and transmit a wide-area monitoring image and a centralized monitoring image to a control unit at a remote place.

The present disclosure also provides a remote monitoring system configured with such a camera apparatus and having a simple system configuration.

**Technical Solution**

In one general aspect, a monitoring camera apparatus acquiring a monitoring image to be displayed on a remote control apparatus and controlling a centralized monitoring imaging unit without the remote control apparatus includes: a wide-angle imaging unit acquiring a wide-angle image regarding a target area; a control and signal-processing unit detecting a location of a moving object from the wide-angle image, controlling the centralized monitoring imaging unit to photograph the moving object by generating a control signal corresponding to information on the location of the moving object, and receiving a centralized monitoring image acquired by the centralized monitoring imaging unit; and a signal transmission unit transmitting the monitoring image including the centralized monitoring image to the remote control apparatus.

According to one embodiment, the control and signal-processing unit may output the control signal according to location information of one image sector associated with the moving object among a plurality of image sectors constituting the wide-angle image.

According to one embodiment, the control and signal-processing unit may output a certain preset code to the centralized monitoring imaging unit as the control signal according to the location information of the moving object to allow the centralized monitoring imaging unit to control a photographing direction according to the preset code. According to an alternative embodiment, however, the control and signal-processing unit may output panning and tilting control values regarding the centralized monitoring imaging unit to the centralized monitoring imaging unit as the control signal according to the location information of the moving object.

According to one embodiment, the control and signal-processing unit may compare a previously photographed wide-angle image and a current wide-angle image by unit of multiple image sectors, and if a calculation value of a variation of a pixel value is equal to or greater than a certain reference value in the respective image sectors, may determine that the image sector is associated with the moving object. If the calculation value of the variation of the pixel value is equal to or greater than the reference value in two or more image sectors adjacent to each other, the control and signal-processing unit may determine that an image sector having a maximum calculation value of the variation of the pixel value is associated with the moving object.

According to another embodiment, the control and signal-processing unit may compare a previously photographed wide-angle image and a current wide-angle image to detect the moving object, and may determine the associated image sector by determining whether a specific coordinate of the moving object pertains to the associated image sector among the multiple image sectors. According to still another embodiment, the control and signal-processing unit may detect the moving object from the wide-angle image, determine a location of a central point of the moving object in the wide-angle image as a form of polar coordinate, and output the control signal according to the polar coordinate. At this time, the control and signal-processing unit may determine a size of the moving object and include a zoom ratio control value corresponding to the size in the control signal.

According to one embodiment, the monitoring camera apparatus may further include: a panorama image construction unit for constructing a panorama image from the wide-angle image; and an image combination unit combining the centralized monitoring image received from the centralized monitoring imaging unit. Here, the signal transmission unit may transmit the combined image to the remote control apparatus as the monitoring image.

According to one embodiment, the image combination unit may format the panorama image and the centralized monitoring image into one output image that is displayed on a display of the remote control apparatus. However the image combination unit may simply multiplex the panorama image signal and the centralized monitoring image signal, and the signal transmission unit may transmit a multiplexed image signal to the remote control apparatus.

The signal transmission unit may transmit the output image to the remote control apparatus through a coaxial cable or for example, a LAN or the internet.

The monitoring camera apparatus may further include a storage unit for storing one of the wide-angle image, the centralized monitoring image, the panorama image, or a combination thereof.

The centralized monitoring imaging unit may be an independent unit located outside the monitoring camera apparatus. In such configuration, the monitoring camera apparatus may further include: an image input terminal receiving the centralized monitoring image from the centralized monitoring imaging unit; and a serial communication unit transmitting the control signal to the centralized monitoring imaging unit. The serial communication unit may be used when the control and signal-processing unit receives a unit control signal from the remote control apparatus.

When panning/tilting control signals regarding the centralized monitoring imaging unit are received, the control and signal-processing unit may transmit the panning/tilting control signals prior to a control signal corresponding to the location information of the moving object to the centralized monitoring imaging unit.

When the centralized monitoring imaging unit is an independent unit located outside the monitoring camera apparatus, the monitoring camera apparatus may further include a signal conversion unit receiving an analog centralized monitoring image from the centralized monitoring imaging unit through the image input terminal and generating a digital centralized monitoring image. Here, the image combination unit may combine a digital panorama image and the digital centralized monitoring image.

A plurality of centralized monitoring imaging units may be connected to a single monitoring camera apparatus. In such configuration, the control signals that the control and signal-processing units transmit to the centralized monitoring imaging unit may include reception unit identification information.

When the centralized monitoring imaging unit is an independent unit located outside the monitoring camera apparatus, an optical axis of a wide-angle lens of the wide-angle image unit may be aligned with a panning central axis of the centralized monitoring imaging unit.

The centralized monitoring imaging unit may be disposed in the monitoring camera apparatus. In such configuration, a plurality of wide-angle imaging units may be symmetrically disposed on an outer circumferential surface of the monitoring camera apparatus. The control and signal-processing unit may detect a moving object from each of a plurality of wide-angle images acquired by the plurality of wide-angle imaging units. The panorama image construction unit may extract a certain region from each of the plurality of wide-angle images, and combine the extracted regions to construct the panorama image.

In another general aspect, a remote monitoring system includes: at least one slave camera selectively and intensively photographing a target area and capable of panning/tilting/zooming operation; a master camera acquiring a wide-angle image regarding the target area, detecting a location of a moving object from the wide-angle image, driving the slave camera according to the location of the moving object to control the slave camera to photograph the moving object, acquiring a centralized monitoring image from the slave camera, and constructing an output image based on the wide-angle image and the centralized monitoring image; and a remote control apparatus displaying the output image on a monitor and remotely controlling the master camera.

According to one embodiment, the master camera may supply a control signal according to location information of one image sector associated with the moving object among a plurality of image sectors constituting the wide-angle image to control the slave camera.

The master camera may include: a panorama image construction unit for constructing a panorama image from the wide-angle image; an image combination unit combining the panorama image and the centralized monitoring image received from the centralized monitoring imaging unit; and a signal transmission unit for transmitting the combined image to the remote control apparatus as the output image.

In another general aspect, the present disclosure provides a method for acquiring a monitoring image using a monitoring camera apparatus including a wide-angle imaging unit, acquiring a monitoring image to be displayed on a remote control apparatus, and controlling a centralized monitoring imaging unit without the remote control apparatus.

A monitoring camera first acquires, by the wide-angle imaging unit, a wide-angle image regarding a target area; detects a location of a moving object from the wide-angle image; generates a control signal corresponding to information on the location of the moving object; provides the control signal to the centralized monitoring imaging unit to control the centralized monitoring imaging unit to photograph the moving object; receives a centralized monitoring image acquired by the centralized monitoring imaging unit; and transmits the monitoring image including the centralized monitoring image to the remote control apparatus.

According to one embodiment, the centralized monitoring imaging unit may be an independent unit that is located outside the monitoring camera apparatus. According to another embodiment, however, the centralized monitoring imaging unit may be disposed in the camera apparatus.

According to one embodiment, the detecting of the location of the moving object may include: dividing the wide-angle image into a plurality of image sectors; comparing a previously-photographed wide-angle image and a current wide-angle image by unit of the plurality of image sectors; calculating the number of pixels of each image sector, in which a variation of a pixel value is greater than a first reference value; and determining location information of an image sector whose calculation value is equal to or greater than a second reference value as location information of the moving object.

According to one embodiment, the detecting of the location of the moving object may include: dividing the wide-angle image into a plurality of image sectors; comparing a previously-photographed wide-angle image and a current wide-angle image by unit of the plurality of image sectors to detect the moving object; and determining location information of an image sector to which a specific coordinate of the moving object pertains as the location information of the moving object.

According to one embodiment, the detecting of the location of the moving object may include: detecting the moving object in the wide-angle image; determining a location of a central point of the moving object in a form of polar coordinate; and determining panning/tilting control values regarding the centralized monitoring imaging unit according to the polar coordinate to generate the control signal. The method may further include: determining a size of the moving object; and additionally generating a zoom ratio control value corresponding to the size as the control signal.

## Advantageous Effects

As described above, the present invention may omnidirectionally detect a motion from a wide-angle image obtained using a 360° reflector or a fish-eye lens, track a moving object by controlling a PTZ camera disposed at a certain location based on the detection of the motion, and allow the wide-angle image and a centralized monitoring image of the PTZ camera to be displayed on a monitor. Thus, a limitation of the PTZ camera in occurrence of a blind spot and a limitation of an omnidirectional camera in reduction of image quality upon surveillance of a remote object can be mutually complemented.

Particularly, according to the present invention, since the control of the PTZ camera is performed by a wide-angle camera, when a plurality of cameras are operated, the load of data processing can be more significantly reduced than image data for analysis is concentrated on a remote monitor/control apparatus.

Since a centralized management image signal can be received as an analog signal or a digital signal while a master camera directly controls panning/tilting/zooming of a slave camera, and an output signal combining a panorama image and a centralized management image can be selectively transmitted to a remote monitor/control apparatus as an analog signal or a digital signal, an existing system can be utilized when upgrading an existing analog monitoring system, and upgrade cost can be minimized.

Also, since the master camera can store its own image as well as images of the slave camera separately from a monitoring center, recording can be performed without interruption even when a failure occurs in the monitoring center.

Since a task of the remote monitor/control apparatus is distributed into the camera apparatus, the load of data processing of the remote monitor/control apparatus can be significantly reduced, and the remote monitor/control apparatus can be operated only with a small number of persons. Also, since the image signal of the slave camera is transmitted to the remote monitor/control apparatus through a master camera, the system construction can be simplified, and costs for line installation and maintenance can be saved.

## Brief Description of Drawings

Embodiments of the present invention are explained below with reference to the attached drawings. For convenience, the same reference numbers are used throughout the drawings to refer to same or like parts.

FIG. 1 is a block diagram illustrating an image monitoring system according to an embodiment of the present invention;

FIG. 2 is a block diagram illustrating a master camera according to an embodiment shown in FIG. 1;

FIG. 3 is a block diagram illustrating a slave camera according to an embodiment shown in FIG. 1;

FIG. 4 is a diagram illustrating an exemplary method for converting a wide-angle image into a rectangular panorama image;

FIG. 5 is a diagram illustrating exemplary constructions of output images;

FIG. 6 is a flowchart illustrating an operation process of a master camera shown in FIG. 1;

FIG. 7 is a diagram illustrating an exemplary wide-angle image divided into a plurality of sectors to detect a motion and control a slave motor;

FIG. 8 is a diagram illustrating a process for detecting a moving object according to an embodiment of the present invention;

FIG. 9 is a diagram illustrating a process for detecting a moving object according to another embodiment of the present invention;

FIG. 10 is a diagram illustrating a process for detecting a moving object according to still another embodiment of the present invention;

FIG. 11 is a diagram illustrating a method for determining a tilting angle in a case where a wide-angle lens has an orthogonal projection refraction characteristic;

FIG. 12 is a diagram illustrating a method for determining a tilting angle in a case where a wide-angle lens has an equidistant projection refraction characteristic;

FIG. 13 is a diagram illustrating an exemplary output image in which a moving object pointer is added in a portion of a panorama image;

FIG. 14 is a diagram illustrating an exemplary tracking table for storing movement history information about respective moving objects;

FIG. 15 is a diagram illustrating a process of controlling a slave camera when a new moving object is detected in a wide-angle image;

FIG. 16 is a diagram illustrating a process of controlling a slave camera when an additional moving object is detected in a wide-angle image;

FIG. 17 is a diagram illustrating a process of controlling a slave camera when a plurality of moving objects are located in the same image sector;

FIG. 18 is a diagram illustrating a process of controlling a slave camera when moving objects in the same image sector are again separated from each other;

FIG. 19 is a diagram illustrating an exemplary output image in which different types of pointers are added to moving objects when a plurality of moving objects exist in a panorama image;

FIG. 20 is a block diagram illustrating a modified embodiment of the master camera shown in FIG. 2;

FIG. 21 is a block diagram illustrating another modified embodiment of the master camera shown in FIG. 2;

FIG. 22 is a block diagram illustrating still another modified embodiment of the master camera shown in FIG. 2;

FIGS. 23 through 30 are diagrams illustrating installation examples of a master camera and a slave camera;

FIG. 31 is a block diagram illustrating an image monitoring system according to another embodiment of the present invention;

FIG. 32 is a block diagram illustrating a camera apparatus of FIG. 31 according to an embodiment of the present invention;

FIG. 33 is a diagram illustrating a panorama image construction method by a panorama image construction unit shown in FIG. 32;

FIG. 34 is a perspective view illustrating a camera apparatus of FIG. 32 according to an embodiment of the present invention;

FIG. 35 is a block diagram illustrating a camera apparatus of FIG. 31 according to another embodiment of the present invention;

FIG. 36 is a diagram illustrating a panorama image construction method by a panorama image construction unit shown in FIG. 35;

FIG. 37 is a side view illustrating a camera apparatus of FIG. 35 according to an embodiment of the present invention;

FIG. 38 is a bottom perspective view illustrating a camera apparatus of FIG. 35 according to another embodiment of the present invention; and

FIG. 39 is a bottom perspective view illustrating a camera apparatus of FIG. 35 according to still another embodiment of the present invention.

## Modes of Embodiments of the Invention

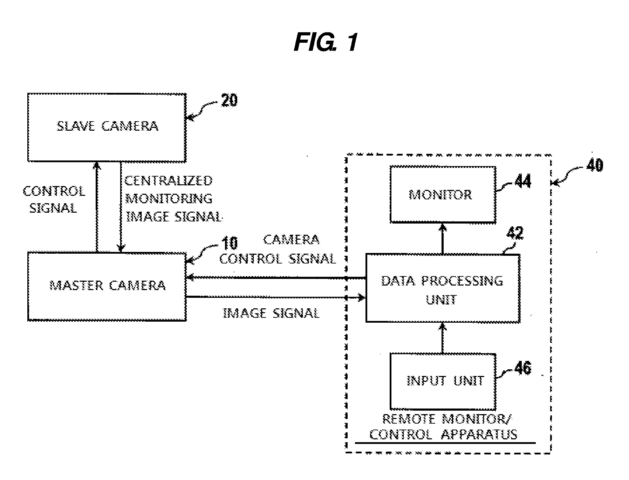

FIG. 1 illustrates an image monitoring system according to an embodiment of the present invention. The image monitoring system may include a master camera 10, a slave camera 20, and a remote monitor/control apparatus 40.

The master camera 10, which is an intelligent monitoring camera apparatus according to an embodiment of the present invention, may omnidirectionally photograph a monitoring area, detect a moving object from a photographed omnidirectional image, and control the slave camera 20 to thoroughly photograph an area from which the moving object is detected. Also, the master camera 10 may create an output image by combining the omnidirectional image and the centralized monitoring image acquired by the slave camera 20, and may provide the output image to the remote monitor/control apparatus 40 as an analog image signal or a digital image signal.

The slave camera 20 may receive a control signal from the master camera 10 via a serial communication, and may acquire a centralized monitoring image to output it to the master camera 10 under the control of the master camera 10. On the other hand, in a preferred embodiment, a centralized monitoring image signal that the slave camera 20 supplies to the master camera 10 may be a composite video signal complying with the NTSC standards, but the centralized monitoring image signal are not limited thereto. For example, the centralized monitoring image signal may also be a signal complying with PAL, SECAM, or other standards. On the other hand, the slave camera 20 may be at least one Pan-Tilt-Zoom (PTZ) camera that can perform horizontal rotation and vertical rotation, and zoom-in/zoom-out. However, in a modified embodiment, the slave camera 20 may be a combination of a plurality of fixed cameras. In such a case, the respective fixed cameras may be a camera that can perform zoom-in/zoom-out.

The remote monitor/control apparatus 40 may be installed at a remote place distant from the master camera 10, and may include a data processing unit 42, a monitor 44, and an input unit 46. The data processing unit 42 may receive an output image from the master camera 10, and may display the output image on the monitor 44. Also, the data processing unit 42 may control the master camera 10 according to a user's input that is inputted through the input unit 46, or may control the slave camera 20 via the master camera 10. The data processing unit 42 may be implemented using a typical PC, and may further include a matrix, a screen divider, and an image distribution amplifier to process a displayed image. The input unit 46 may include one of keyboard, mouse, joystick input devices, or a combination thereof.

For simplicity and clarity of explanation, in FIG. 1, only one master camera 10 is connected to the remote monitor/control apparatus 40 and only one slave camera 20 is connected to the master camera 10. However, the image monitoring system may include a plurality of cameras 10 and 20. In other words, a plurality of master cameras 10 may be connected to the remote monitor/control apparatus 40, and a plurality of slave cameras 20 may be connected to the respective master cameras 10.

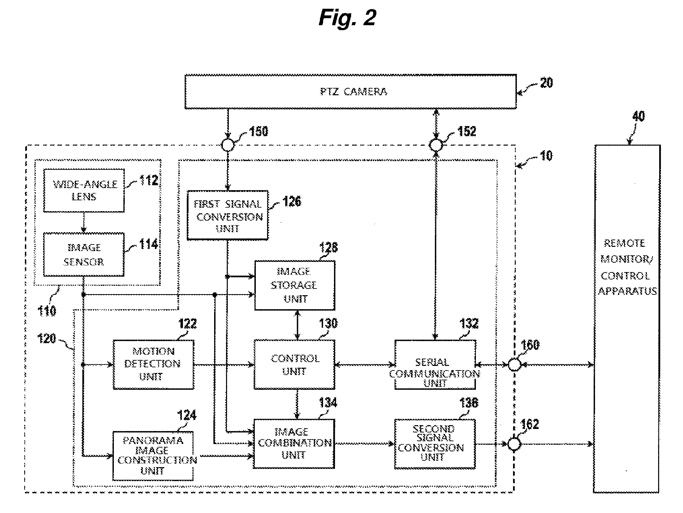

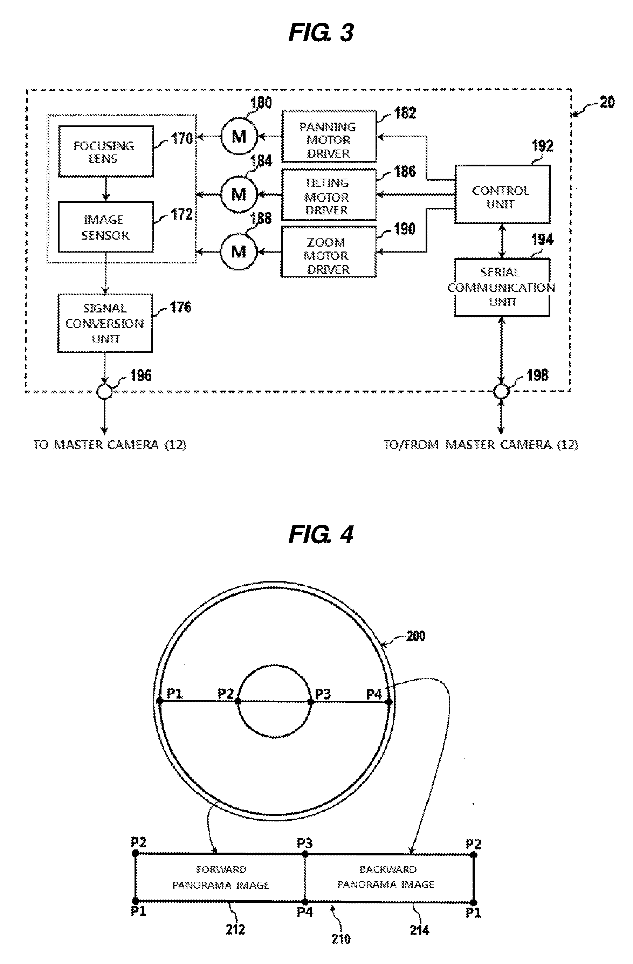

FIG. 2 illustrates the master camera 10 shown in FIG. 1. FIG. 3 illustrates the slave camera 20 shown in FIG. 1.

Referring to FIG. 2, the master camera 10 may include a wide-angle imaging unit 110 and a control/signal-processing circuit 120. Also, the master camera 10 may include an image signal input terminal 150 for receiving an image signal from the slave camera 20, a first serial port 152 for supplying a control signal to the slave camera 20, a second serial port 160 for receiving a camera control signal from the remote monitor/control apparatus 40, and an image signal output terminal 162 for supplying an image signal to the remote monitor/control apparatus 40.

In a wide-angle image unit 110, a wide-angle lens 112, which is an optical structure including 180-degree fish-eye lens, 360-degree reflector, or a combination of lens or mirrors, may concentrate omnidirectionally-incident light in a monitoring area to image on an image sensor 114. The image sensor 112 may include a Complementary Metal-Oxide Semiconductor (CMOS) or a Charge-Coupled Device (CCD) and an analog-digital converter, and may convert and digitize light concentrated by the wide-angle lens 112 into an electrical signal to output a digital wide-angle image signal. A wide-angle image acquired by the wide-angle imaging unit 110 may be circular or ring-shaped.

In the control/signal-processing circuit 120, the motion detection unit 122 may receive a wide-angle image signal from the wide-angle imaging unit 110, and may determine whether a moving object exists in the image while comparing the wide-angle image by unit of frame. Here, the compared frames may be successive frames, and may be frames that are temporally separated by a cycle of multiple frames. A detailed description of a motion detection algorithm will be made later.

A panorama image construction unit 124 may convert the wide-angle image from the wide-angle imaging unit 110 into a rectangular panorama image. FIG. 4 illustrates an exemplary method for converting a wide-angle image into a rectangular panorama image. The panorama image construction unit 124 may divide a circular or ring-shaped wide-angle image 200 into a lower region and an upper region, and may spread the respective regions and convert pixels into a rectangular image by filling the vacant pixels using interpolation. In this case, the central portion of the circular wide-angle image having low information may not be used for conversion to reduce the load of operations according to the interpolation.

Hereinafter, a rectangular image 212 of the lower region of the wide-angle image 200 will be referred to as a forward panorama image, and a rectangular image 214 of the upper region of the wide-angle image 200 will be referred to as a backward panorama image. Also, an image 210 in which the forward panorama image 212 and the backward panorama image 214 are horizontally connected to each other will be referred to as a panorama image. In the drawing, points P1 to P4 represent corresponding points of the wide-angle image 200 and the forward and backward panorama images 212 and 214. The width of the forward panorama image 212 and the backward panorama image 214 may be equal to the width of the centralized monitoring image from the slave camera 20. However, in a modified embodiment, the width of the panorama image 210 may be equal to the width of the centralized monitoring image.

Referring again to FIG. 2, a first signal conversion unit 126 may convert a centralized monitoring image signal received through the image signal input terminal 150 into a digital image signal. The first signal conversion unit 126 may convert the centralized monitoring image signal of a composite video signal format into a digital YCbCr or RGB component image signal similarly to the wide-angle image signal.

An image storage unit 128 may include a storage medium such as hard disk or Solid State Drive (SSD), and may store a digital centralized monitoring image signal and a wide-angle image signal. The image storage unit 128 may also store a compressed image signal instead of the original image signal. In this embodiment, the image storage unit 128 may further include a compression/decompression unit for compressing the original image signal or decompressing a compressed image signal. The compression/decompression unit may be implemented by a computer program that is executed on a microprocessor for implementing a control unit 130.

The control unit 130 may control the overall operation of the master camera 10 and control panning-tilting-zooming operations of the slave camera 20. The basic control operation of the control unit 130 may be performed a computer program, or may be performed in response to a camera control signal received from the remote monitor/control apparatus 40. Particularly, the control unit 130 may vary the construction of an output image by controlling an image combination unit 134 according to the camera control signal. Also the control unit 130 may allow an image signal stored in the image storage unit 128 to be read out and provided to the remote monitor/control apparatus 40 according to the camera control signal. On the other hand, when the camera control signal includes a control signal regarding the slave camera 20, the control signal may be relayed to the slave camera 20.

A serial communication unit 132 may allow the control unit 130 to communicate with the slave camera 20 through the first serial port 152 and communicate with the remote monitor/control apparatus 40 through the second serial port 160. In other words, the control unit 130 may transmit control signals including a PTZ control signal to the slave camera 20 through the serial communication unit 132, and may receive the state information from the slave camera 20. Also, the control unit 130 may receive the camera control signal from the remote monitor/control apparatus 40 through the serial communication unit 132, and may transmit the state information of the master camera 10 and/or the slave camera 20 to the remote monitor/control apparatus 40. The connection between the serial communication unit 132 and the slave camera 20 or the remote monitor/control apparatus 40 may be performed according to RS232C, RS422 or RS485 standards.

The image combination unit 134 may select at least one of the wide-angle image 200, the forward panorama image 212, the backward panorama image 214, the panorama image 210, and the centralized monitoring image to configure an output image.

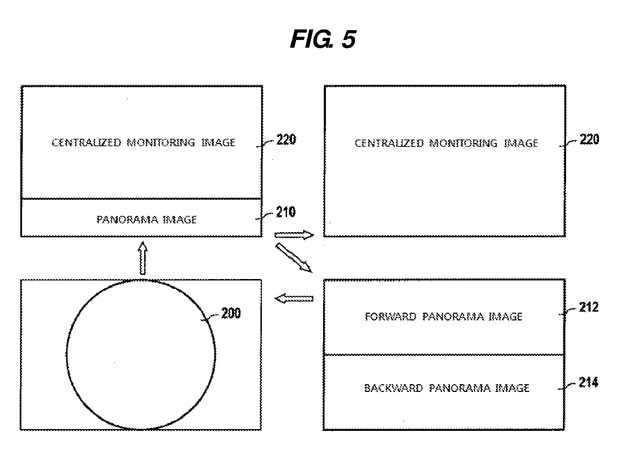

FIG. 5 illustrates an exemplary configuration of an output image. In a basic output screen, the panorama image 210 may be disposed at the lower side of the screen, and the centralized monitoring image 220 acquired by the slave camera 20 may be disposed at the upper side and the central region of the screen (see left-top of FIG. 5). In a state where the output image is transmitted to the remote monitor/control apparatus and displayed on a monitor 44, an operator may manipulate the input unit 46 to change the configuration of the output image. For example, when an operator selects a portion of the centralized monitoring image 220 from the output image, the remote monitor/control apparatus 40 may transmit a control signal for demanding a change of the configuration of the output image, and the control unit 130 that receives the control signal through the serial communication unit 132 may allow the image combination unit 134 to include only the centralized monitoring image 220 in the output image (see right-top of FIG. 5). Similarly, when an operator selects a portion of the panorama image 210 from the output image, the image combination unit 134 may combine only the forward panorama image 212 and the backward panorama image 214 to configure the output image (see right-bottom of FIG. 5). In this case, when an operator selects a certain point from the output image, the image combination unit 134 may dispose only the wide-angle image 200 in the output image (see left-bottom of FIG. 5). Finally, an operator may return to the basic output screen by pushing a specific key (e.g., ESC key). On the other hand, the output image may be automatically switched according to a specific sequence, based on occurrence of a detection event of a moving object.

Referring again to FIG. 2, the second signal conversion unit 136 may generate a composite video signal regarding the output image configured by the image combination unit 134, and may transmit the composite video signal to the remote monitor/control apparatus 40 through the image signal output terminal 162. Thus, the output image configured by the image combination unit 134 may be displayed on the monitor 44 of the remote monitor/control apparatus 40.

In the master camera 10 shown in FIG. 2, all components except the wide-angle image unit 110 may be configured with hardware, but a portion thereof may also be configured with software. Also, all components including the wide-angle image unit 110 may be housed in one housing, but embodiments are not limited thereto. For example, components may be separately installed in two or more housings. Also in this case, the housings may be provided at places close to each other or at the same geographical sites such that components installed in a plurality of housings can perform signal communication without a separate telecommunication standard or communication protocol.

Referring to FIG. 3, the slave camera 20 may include a focusing lens 170, an image sensor 172, a signal conversion unit 176, a panning motor 180, a panning motor driver 182, a tilting motor 184, a tilting motor driver 186, a zoom motor 188, a zoom motor driver 190, a control unit 192, and a serial communication unit 194. Also, the slave camera 20 may further include an image signal output terminal 196 for transmitting an acquired centralized monitoring image to the master camera 10, and a serial port 198 for receiving a control signal from the master camera 10 and transmitting the camera state information.

The focusing lens 170 may concentrate light incident from the front side. The image sensor 172 may include a CMOS or CCD and an analog-digital converter, and may convert and digitize light concentrated by the focusing lens 170 into an electrical signal and output a digital centralized monitoring image signal. The signal conversion unit 176 may generate a composite video signal regarding a centralized monitoring image from the digital centralized monitoring image signal, and may output the composite video signal through the image signal output terminal 196.

The panning motor driver 182 may drive the panning motor 180 under the control of the control unit 192 to rotate the camera structure including the focusing lens 170 and the image sensor 172 in a horizontal direction. The tilting motor driver may drive the tilting motor 184 under the control of the control unit 192 to rotate the camera structure including the focusing lens 170 and the image sensor 172 in a vertical direction. The zoom motor driver 190 may drive the zoom motor 188 under the control of the control unit 192 to vary the focal length and perform zoom-in/zoom-out functions.

On the other hand, the control unit 192 may drive the panning motor driver 182, the tilting motor driver 186, and the zoom motor driver 190 according to a control signal received from the master camera 10 through the serial communication unit 194. When the control signal from the master camera 10 is generated based on the detection of a moving object, the slave camera 20 may acquire a tracking/monitoring image regarding the moving object. On the other hand, when the control signal is relayed by the master camera 10, the control unit 192 may drive the motors 180, 184 and 188 according to the camera control signals from the remote monitor/control apparatus 40 to photograph a target area in which an operator is interested. The respective motors 180, 184 and 188 may be implemented with stepping motors. On the other hand, the control unit 192 may periodically or aperiodically reset the locations of the respective motors 180, 184 and 188 to the initial locations to allow the direction of the respective motors 180, 184 and 188 to be exactly registered.

A panning/tilting control signal provided to the slave camera 20 by the master camera 10 may become values that represent specific panning and tilting angles. However, in a modified embodiment, a PTZ control signal may also be provided in a form of a preset code. In such an embodiment, since a nonvolatile memory (not shown) of the slave camera 20 may store a present code lookup table (LUT) that represents correspondence relations between the present code and panning and tilting values, respectively, the control unit 192 may drive the panning motor driver 182 and the tilting motor driver 186 with reference to the LUT. The configuration and utilization of the preset code LUT will be described later.

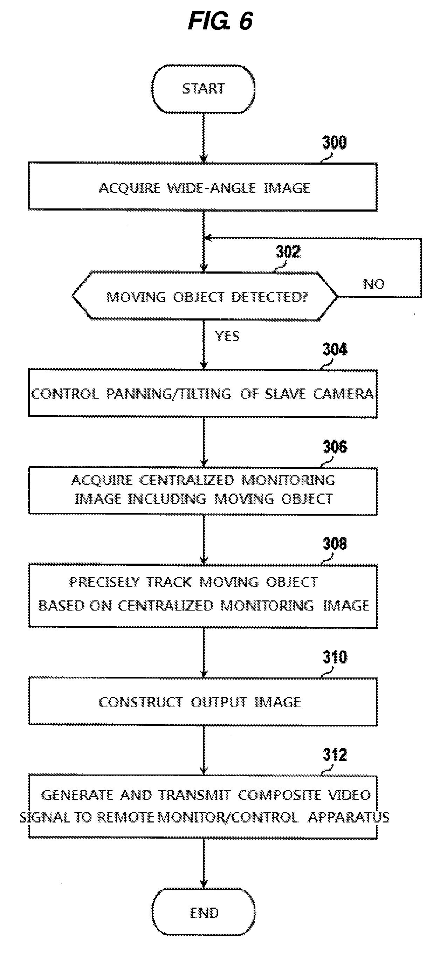

FIG. 6 is a flowchart illustrating an operation process of the master camera 10 shown in FIG. 1

In operation S300, the master camera 10 may acquire a wide-angle image by the imaging unit 110. In operation S302, the motion detection unit 122 may compare the wide-angle image by unit of frame to determine whether a moving object exists and detect a moving object presence region.

If it is determined in operation S302 that a moving object exists, the panning and tilting of the slave camera 20 may be controlled according to the moving object presence region to allow the slave camera 20 to track the moving object in operation S304.

In operation S306, the master camera 10 may receive a centralized monitoring image signal from the slave camera 20 through the image signal input terminal 150, and the first signal conversion unit 126 may restore a digital centralized monitoring image signal from the received signal. Processes of operation S300 to S306 may be repeatedly performed, and thus the moving object may be continuously tracked. In this case, the motion detection unit 122 may recalculate the exact location of the moving object using the digital centralized monitoring image signal, and may precisely control the slave camera 20 based on the result of the recalculation in operation S308.

In operation S310, the image combination unit 134 may configure an output image by combining the panorama image 210 and the centralized monitoring image signal. In operation S312, the second signal conversion unit 136 may generate a composite video signal regarding the output image and transmit the composite video signal to the remote monitor/control apparatus 40. When an operator applies a control command by manipulating the input unit 46 of the remote monitor/control apparatus 40, an image selected by the image combination unit 134 may vary as described above.

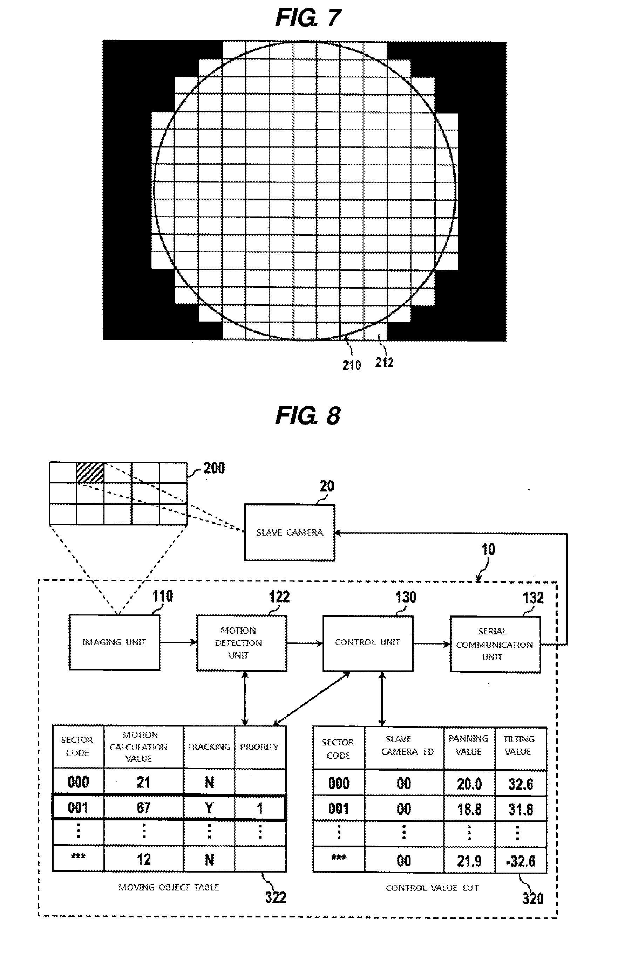

The motion detection process (operation S302) of FIG. 6 and the slave camera control process (operation S304) will be described in more detail with reference to FIGS. 7 through 19.

In a preferred embodiment, the motion detection unit 122 may virtually divide the wide-angle image 200 into a plurality of sectors or blocks, and may determine whether a moving object exists by calculating a variation of pixel values by unit of sector. FIG. 7 illustrates the wide-angle image 200 divided into a plurality of sectors. The wide-angle image 200 may be divided into rectangular sectors 202 having the same size. However, in a modified embodiment, the size and/or shape of the respective sectors may vary according to the location thereof in the image. For example, sectors close to the center of the image 200 may have greater sizes than those of sectors distant from the center of the image 200. Also, the image 200 may be divided such that the sectors may form a circular arc.

FIG. 8 illustrates a process for detecting a moving object according to an embodiment of the present invention.

A nonvolatile memory (not shown) of the master camera 10 may store a control value lookup table (LUT) 320 that represents a correspondence relation between panning and tilting values, and sector codes pre-assigned regarding each sector. The control value LUT 320 may store the panning and tilting values and sector codes regarding each image sector. On the other hand, a slave camera ID taking charge of centralized surveillance on a target area corresponding to an image sector may be further stored in preparation for linkage of a plurality of slave cameras 20 with the master camera 10. Volatile memory such as SRAM or DRAM of the master camera 10 may store and maintain a moving object table 322 for storing motion calculation values calculated by the motion detection unit 122 regarding the respective image sectors.

When the wide-angle image 200 is acquired by the imaging unit 110, the motion detection unit 122 may compare the wide-angle image 200 by unit of frame. Here, the compared frames may be successive frames, or may be temporally-separated frames by a cycle of multiple frames. More specifically, the motion detection unit 122 may compare pixel values or luminance values of a current frame and a previous frame regarding the respective image sectors by unit of pixel, and may calculate the number of pixels having a difference of a pixel value greater than a first reference value in the image sector. When the calculation value is greater than a second reference value, it is determined that a moving object exists in the corresponding image sector, and may output a motion detection signal to the control unit 130. Here, in order to minimize an error, it may also be determined that a moving object exists only when the calculation value is greater than the second reference value certain times or more. In the drawing, it has been exemplified that a calculation value of 67 greater than the second reference value of 40 is calculated in the second image sector (sector code ="01").

When receiving a motion detection signal, the control unit 130 may first check an image sector in which a moving object exists with reference to the moving object table 322. The control unit 130 may read predetermined panning and tilting values regarding the sector in which a moving object exists from the control value LUT 320 and transmit the predetermined panning and tilting values to the slave camera 20 through the serial communication unit 132. Thus, the control unit 130 may allow the slave camera 20 to thoroughly monitor a target area corresponding to the image sector. When motion is detected in two or more image sectors, the motion detection unit 122 may assign the order of priority according to the motion calculation values, and the control unit 130 may allow the slave camera 20 to intensively monitor an image sector having the highest priority. On the other hand, intensive monitoring may also be performed on a specific moving object regardless of the order of priority according to a control signal from the remote monitor/control apparatus 40.

In an embodiment of FIG. 8, the panning and tilting values stored in the control value LUT 320 may be experimentally determined and stored regarding each slave camera 20. For example, the panning and tilting values regarding points corresponding to the substantial center points of each sector of the wide-angle image 200 may be determined while sequentially driving the slave camera 20. In this case, the panning and tilting values of the slave camera 20 regarding each point may also be determined in a state where an installer places an identification plate having numbers or other signs in a target area. Also, the panning and tilting values may be experimentally determined only on several points in the wide-angle image 200 or the target area, and the panning and tilting value regarding other locations may be interpolated according to the law of proportional part. On the other hand, a zoom ratio may be together stored in the control value LUT 320 in addition to the panning and tilting values to together provide the zoom ratio upon control of the slave camera 20. Also, the panning and tilting values and the zoom ratio that are stored in the control value LUT 320 and provided to the slave camera 20 may be represented as absolute values of the spherical coordinates centering around the slave camera 20, and may also become relative values based on a specific location. In this case, specific panning and tilting values and zoom ratio may also be determined by unit of the motor resolution instead of the angle or the focal length.

Thus, since the control unit 130 provides the panning and tilting values like a "GOTO" command, the centralized monitoring direction of the slave camera 20 can be determined. Also, the control unit 130 may also provide these control values to the slave camera 20 according to the control signal from the remote monitor/control apparatus 40.

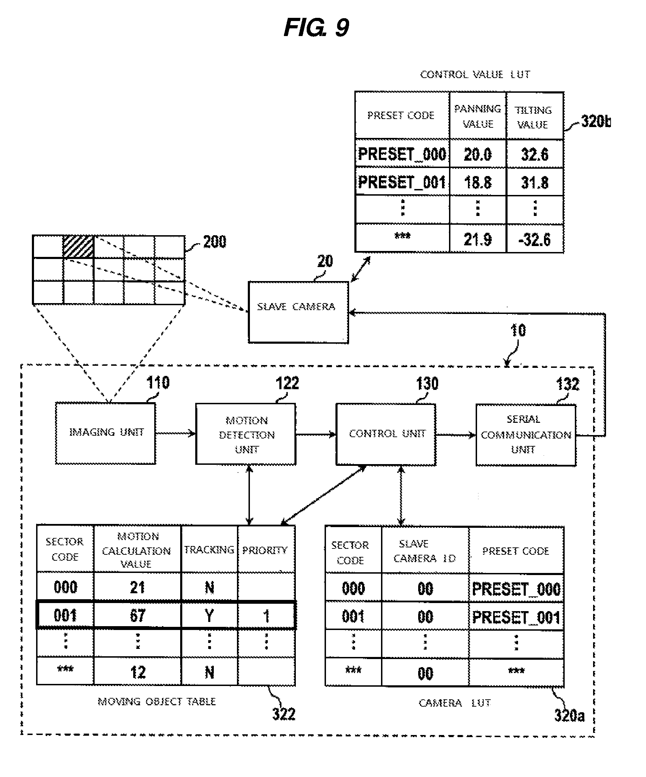

FIG. 9 is a diagram illustrating a process for detecting a moving object according to another embodiment of the present invention.

According to the present embodiment, a camera LUT 320a housed in the nonvolatile memory (not shown) of the master camera 10 may not store specific parameter values for driving the slave camera 20, but may store only preset codes designating the parameter values. Specific panning and tilting values regarding each preset code may be stored in a control value 320b that is maintained in the slave camera 20. The preset code values may also be determined identically to the sector code values.

When the wide-angle image 200 is acquired by the imaging unit 110, the motion detection unit 122 may compare image sectors of the wide-angle image 200 by unit of frame to calculate a motion calculation value. When the calculation value is greater than the second reference value, the motion detection unit 122 may determine that a moving object exists in a corresponding image sector, and may output a motion detection signal to the control unit 130.

When receiving a motion detection signal, the control unit 130 may first check an image sector in which a moving object exists with reference to the moving object table 322. The control unit 130 may read preset code values regarding the sector in which a moving object exists from the camera LUT 320a and transmit the preset code values to the slave camera 20 through the serial communication unit 132. The slave camera 20 may read panning and tilting values corresponding to the preset code values from the control value LUT 320b stored in a built-in memory thereof, and may intensively monitor a target area corresponding to the image sector by driving the panning motor 180 and the tilting motor 184 using the read values.

According to the embodiment of FIG. 9, upon detection of a motion, since the control unit 130 transmits only the preset code values designating PTZ control parameters to the slave camera 20, and the slave camera 20 interprets the preset code values to drive the panning motor 180 and the tilting motor 184, the control process may be simplified in the light of the master camera 10, and data communication between the master camera 10 and the slave camera 20 may be facilitated. A detailed description of other features of the embodiment of FIG. 9 will be omitted herein because they are similar to those of the embodiment of FIG. 8.

According to the embodiment of FIGS. 8 or 9, since a motion is directly detected from the wide-angle image 200 that is the original image prior to creation of the panorama image 210, the speed of motion detection may be fast. Also, since the wide-angle image 200 is divided into sectors, and it is determined by only pixel values whether a moving object exists, a complicated calculation such as coordinate conversion necessary for spreading of the wide-angle image 200 may not be required, and there is a further advantage in terms of the motion detection speed. Also, since the slave camera 20 is uniformly controlled by unit of image sector, time necessary for initial tracking may be shortened.

On the other hand, in a preferred embodiment, error can be prevented and the tracking performance can be enhanced by verifying the moving object detection using the centralized monitoring image 220 acquired by the slave camera 20, for example, a block matching algorithm. In addition, the motion detection unit 122 may detect the contour of each moving object, and provide information on the size of the moving object to the control unit 130, in a process of detecting the moving object using the centralized monitoring image 220. In this case, the control unit 130 may determine a zoom ratio in regard to the centralized monitoring image 220 based on the information on the size of the moving object, and may control the slave camera 20.

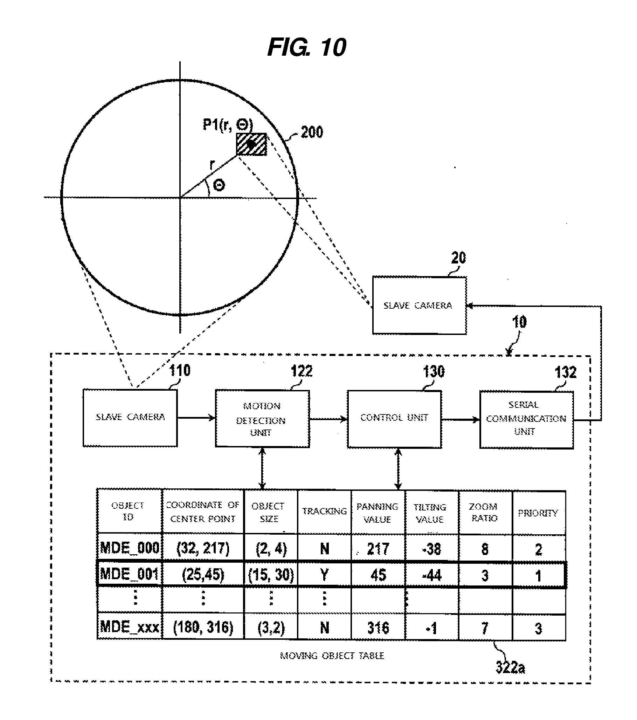

However, the present invention is not necessarily limited to detecting a motion by unit of image sector or performing the control of the slave camera 20. In other words, the motion detection unit 122 may detect a moving object using the whole wide-angle image 200, and may also control the slave camera 20 according to the coordinate of the moving object after determining the location of the moving object by unit of pixel. FIG. 10 illustrates such a modified embodiment.

In an embodiment of FIG. 10, when the wide-angle image 200 is acquired by the imaging unit 110, the motion detection unit 122 may compare the wide-angle image 200 by unit of frame to detect a moving object. In one embodiment, the motion detection may be performed by calculating a motion calculation value regarding each pixel and grouping pixels having a calculation value greater than a reference value into neighboring pixels. The motion detection unit 122 may determine the coordinate of the center point of the object in a form of two-dimensional polar coordinates (r, θ) by calculating a mean value or an intermediate value regarding coordinates of pixels constituting the moving object. Here, r represents a distance from the center point of the object to the center point of the image 200, and θ represents an azimuth from a certain reference line. Furthermore, the motion detection unit 122 may determine the size of each moving object in the vertical and horizontal directions. The motion detection unit 122 may assign IDs to each moving object, and may store the coordinate (r, θ) of the center point and data about the size in the moving object table 322a.

The control unit 130 may determine the panning and tilting values of the slave camera 20 from the coordinate (r, θ) of the center point in regard to each moving object. The control unit 130 may determine a zoom ratio using the image size and the distance coordinate (r) in regard to each moving object. The control unit 130 may transmit the determined panning and tilting values and the zoom ratio to the slave camera 20 through the serial communication unit 132 to allow the slave camera 20 to intensively monitor a target area corresponding to the image sector. When a motion is detected in two or more image sectors, the motion detection unit 122 may assign the order of priority according to the motion calculation value, and the control unit 130 may allow the slave camera 20 to intensively monitor an image sector having the highest priority. On the other hand, intensive monitoring may also be performed on a specific moving object regardless of the order of priority according to a control signal from the remote monitor/control apparatus 40.

In the embodiment of FIG. 10, in the case of substantial similarity with the reference point of the slave camera 20, a method for determining panning and tilting values from the coordinate (r, θ) of the center point of an object is as follows.

First, assuming that the measurement criteria of the panning angle are identical to the measurement criteria of the azimuth coordinate (θ) in the wide-angle image 200, the panning angle may be determined identically to the azimuth coordinate (θ) of the center point of the object. Even when the measurement reference plane of the panning angle is different from the measurement reference plane of the azimuth coordinate in the wide-angle image 200, the panning angle may be easily determined by the first order equation from the azimuth coordinate (θ) of the coordinate (r, θ) of the center point.

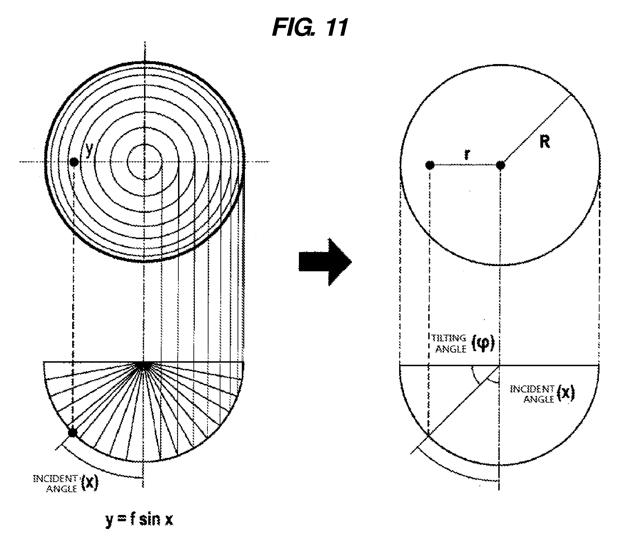

On the other hand, the tilting angle value may be obtained from the distance coordinate (r) of the center point of the object. Generally, the refraction characteristic of a fish-eye lens or the reflection characteristic of a 360° reflector may have a profile characteristic in which incident light can be expressed as a specific mathematic model. For example, when a fish-eye lens 112 has an orthogonal projection refraction characteristic as shown in FIG. 11, a distance of an image-forming point of incident light from the image center may be expressed as Equation (1).

Equation (1)

$$y = f \sin x$$

Here, x is the size of an incident angle, f is a focal length and represents a radius of a wide-angle image, and y is a distance of an image-forming point from the center point of the image.

Accordingly, an incident angle x may be expressed as Equation (2) regarding the center point of an object in which a distance from the center of the image is r in an image having a radius of R.

Equation (2)

$$x = \sin^{-1} \frac{r}{R}$$

When the measurement reference plane of the tilting angle is a horizontal plane, the tilting angle value for driving the slave camera 20 may be (90°- x), and have a minus sign. Accordingly, it can be expressed as Equation (3).

Equation (3)

$$\phi = -(90° - x)$$
$$= \sin^{-1}\frac{r}{R} - 90°$$

On the other hand, when the fish-eye lens 112 has an equidistant projection refraction characteristic, a distance of an image-forming point of incident light from the image center may be expressed as Equation (4).

Equation (4)

$$y = f \cdot x$$

Accordingly, an incident angle x may be expressed as Equation (5) regarding the center point of an object in which a distance from the center of the image is r in an image having a radius of R.

Equation (5)

$$x = \frac{r}{R}$$

When the measurement reference plane of the tilting angle is a horizontal plane, the tilting angle value for driving the slave camera 20 may be (90°- x), and have a minus sign. Accordingly, it can be expressed as Equation (6).

Equation (6)

$$\phi = -(90° - x)$$
$$= \frac{r}{R} - 90°$$

Even when the wide-angle lens or the fish-eye lens 112 has other refraction characteristics, the tilting angle may be determined similarly to the method described above.

Since the above method of determining the panning and tilting values can be applied to a case where the installation reference location of the slave camera 20 is almost similar to the center point of the wide-angle lens 112, it can be usefully applied to a case where the slave camera 20 is installed adjacent to the master camera 10. On the other hand, when the slave camera 20 is distant from the master camera 10, similarly to the embodiment of FIG. 8, the panning and tilting values may be experimentally determined only on several points in the wide-angle image 200 or the target area, and the panning and tilting value regarding other locations may be obtained by interpolation according to the law of proportional part with reference to the stored values. Since such an embodiment can be implemented on the basis of the present disclosure by those skilled in the art, a detailed description thereof will be omitted herein.

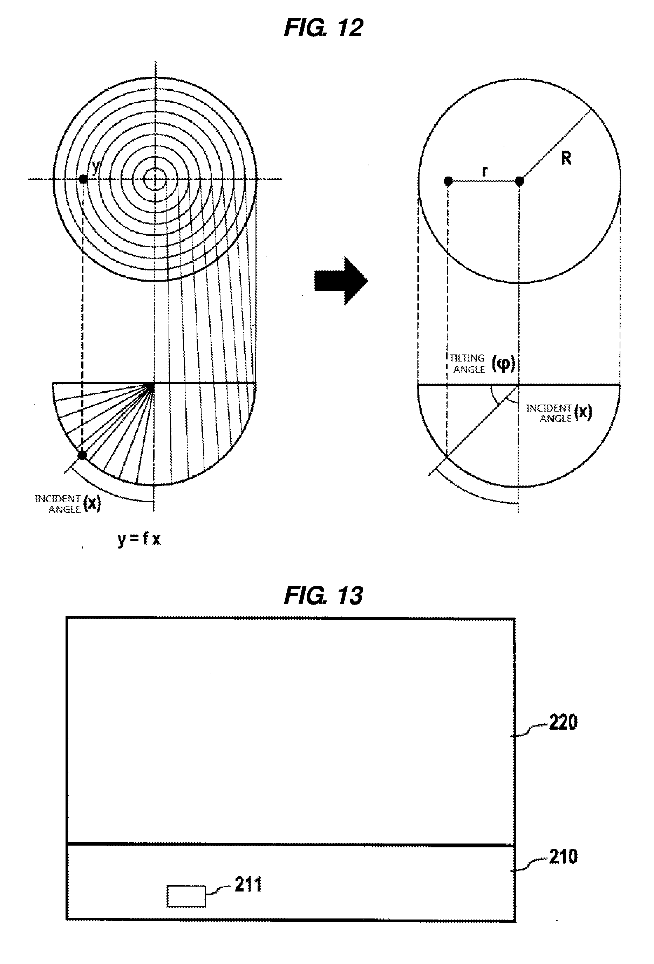

In the embodiments of FIGS. 8 through 10, when a moving object is detected from the wide-angle image 200, and the PTZ operation of the slave camera 20 is controlled using the detection of the moving object, a pointer indicating the location of the moving object that is being tracked by the slave camera 20 may be additionally displayed on a portion of the panorama image 210 in the output image illustrated in FIG. 5. FIG. 13 illustrates an example of such an output image. The control unit 130 may determine the location of the moving object by calculating a substantial intermediate point regarding sectors adjacent to each other among image sectors from which a motion is detected. The control unit 130 may provide the location information to the panorama image construction unit 124 or the image combination unit 134 to allow the panorama image construction unit 124 or the image combination unit 134 to add a pointer 211 having a rectangular shape and having a red color in the panorama image 210. The size of the pointer 211 may be uniform regardless of the size of the moving object. The pointer 211 may enable an operator to more exactly recognize a current situation while comparing the panorama image 210 and the centralized monitoring image 220.

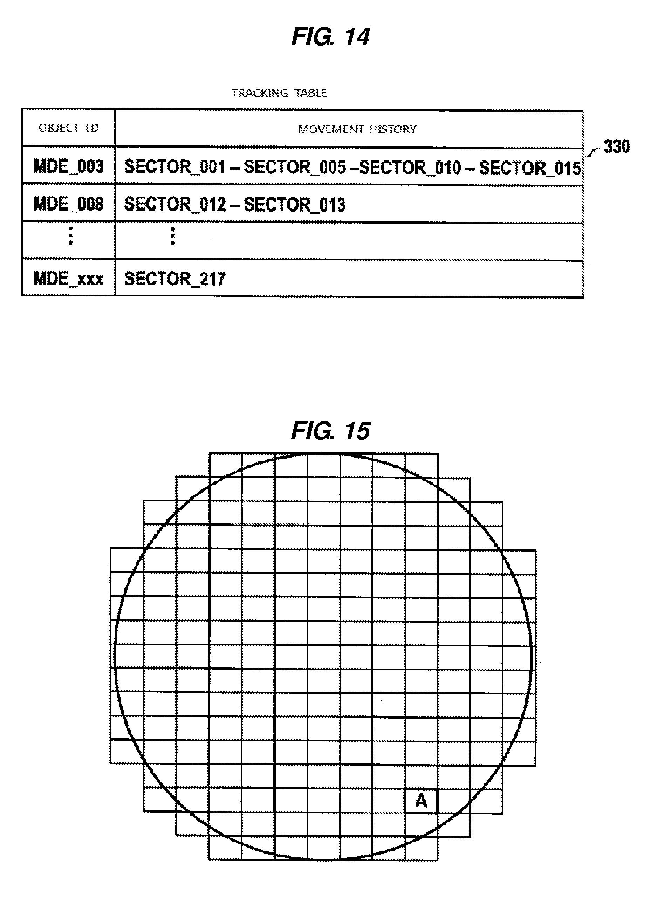

A change of a tracking and monitoring operation according to creation and extinction of a moving object will be described with reference to FIGS. 14 through 19.

As described above, the master camera 10 may store information about a moving object in the moving object table 322 or 322a whenever a new moving object is detected, and may determine a PTZ control value to transmit it to the slave camera 20. Here, unique object IDs and tracking priorities may be assigned to each moving object. The tracking priorities may be changed according to creation and extinction of another moving object and movement of the moving object. In one embodiment, as a moving object gets closer to the center of the wide-angle image 20, a higher priority may be assigned to the moving object. Also, as the movement speed of a moving object within the wide-angle image 200 gets faster, a higher priority may be assigned to the moving object. Here, since the wide-angle image 20 is nonlinear, a distance from the center of the moving image 200 and the moving object and the movement speed of the moving object 200 may generally show a high correlation. However, when the two criteria do not accord with each other, a weight is placed on one of the two criteria to determine the priorities. On the other hand, in a modified embodiment, a higher priority may also be assigned to a newly detected object.

The priority of the moving object may be changed by an operator of the remote monitor/control apparatus 40. Particularly, a highest priority may be assigned to a tracking-target object selected by an operator. In other words, when an operator selects a moving object through the input unit 46, a control signal including information about the selected object may be transmitted to the master camera 10, and the control unit 130 may assign a highest priority to the corresponding object to allow the slave camera 20 to track the corresponding object.

The control unit 130 of the master camera 10 may store movement history information on each moving object that is being currently activated, while creating and maintaining a tracking table 330 in a nonvolatile memory in addition to the moving object table 322 or 322a. FIG. 14 illustrates an exemplary tracking table 330. In the drawing, the tracking table 330 may sequentially store the image sector numbers through which each moving object moves up to now. In a modified embodiment, a change history of the coordinate of the center point of the object or the preset code values for driving the slave camera 20 may be stored instead of the image sector numbers.

Referring to FIG. 15, when the motion detection unit 122 detects a new moving object A, object information and image sector information may be stored in the moving object table 322 or 322a or the tracking table 330. In this case, when motion is detected from different sectors adjacent to each other, it may be considered that the moving object exists in a region in which the motion calculation value is greatest. The control unit 130 may transmit a PTZ control signal to the slave camera 20 according to parameters mapped in an image sector in which the moving object exists, and may transmit an alarming signal to the remote monitor/control apparatus 40 through the serial communication unit 132.

If the moving object moves as time goes by and the motion calculation value regarding image sectors are changed, the motion detection unit 122 may determine that the moving object has moved to a sector having the greatest motion calculation value, and may store information about the new image sector in the moving object table 322 or 322a and the tracking table 330. The control unit 130 may transmit a PTZ control signal to the slave camera 20 according to parameters corresponding to the renewed image sector information. On the other hand, when the moving object deviates from the boundary of the wide-angle image 200 or completely disappear from the image, the information about the object may be deleted from the moving object table 322 or 322a or the tracking table 330.

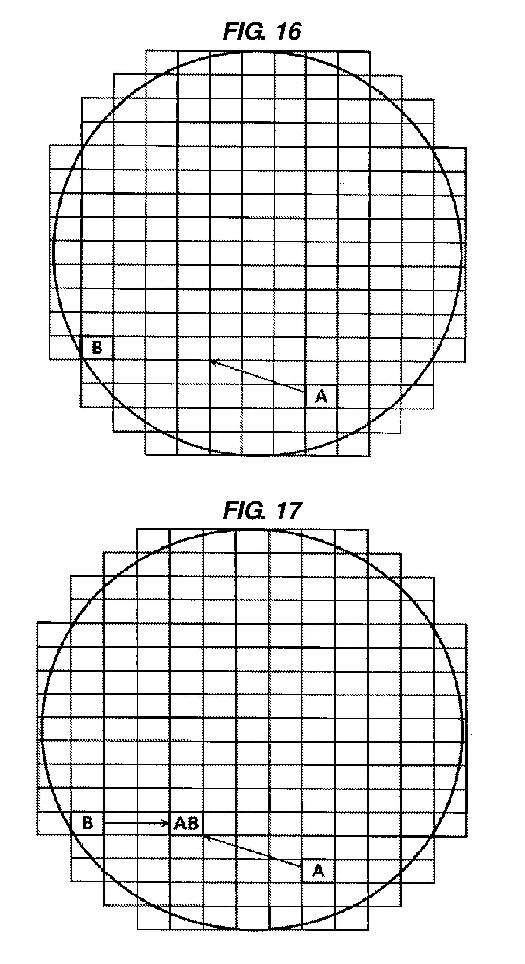

Referring to FIG. 16, if another moving object B is detected from an image sector that is not adjacent to the image sector in which the previous moving object exists, the motion detection unit 122 may store object information and image sector information about the new moving object B in the moving object table 322 or 322a and the tracking table 330. In this case, the control 130 may transmit an alarming signal informing of emergence of a new moving object to the remote monitor/control apparatus 40 through the serial communication unit 132. On the other hand, the control unit 130 may determine the order of priority regarding the two moving objects A and B according to the criteria described above. The control unit 130 may transmit a PTZ control signal to the slave camera 20 according to parameters mapped in an image sector in which an object having a higher priority exists, allowing the slave camera 20 to acquire a centralized monitoring image regarding the moving object having the higher priority.

Referring to FIG. 17, a plurality of moving objects A and B may be located in the same image sector. In this case, the motion detection unit 122 may store image sector information common to the two moving objects A and B in the moving object table 322 or 322a and the tracking table 330. Also, the control unit 130 may transmit a PTZ control signal to the slave camera 20 according to parameters mapped in the common image sector to allow the slave camera 20 to acquire a centralized monitoring image including both objects A and B.

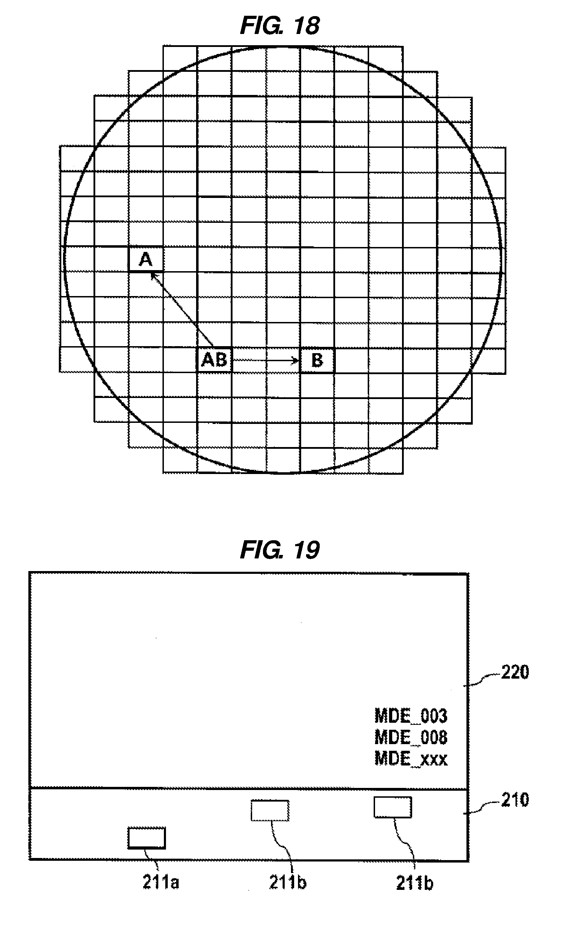

Referring to FIG. 18, when both or one of two moving objects A and B move, and thus the moving objects A and B are located in different image sectors, the control unit 130 may again determine priorities regarding the two moving objects A and B according to the criteria described above. The control unit 130 may transmit a PTZ control signal to the slave camera 20 according to parameters mapped in an image sector in which an object having a higher priority to allow the slave camera 20 to acquire a centralized monitoring image regarding the moving object having the higher priority.

Referring to FIGS. 15 through 18, when there is a plurality of moving objects in the wide-angle image 200, a plurality of moving objects may be displayed on the panorama image 210 included in an output image, and a portion of moving objects may be displayed on the centralized monitoring image 220. In this case, the panorama image construction unit 124 or the image combination unit 134 may represent a moving object having the highest priority and displayed in the centralized monitoring image using a different type of pointer 211 from the other moving objects. FIG. 19 illustrates such an exemplary output image. For example, a moving object having the highest priority may be represented in the panorama image 210 as a pointer 211a with red color, and the other moving objects may be represented as a pointer 211b with green color. In addition to discrimination in color, the pointer 211a for the moving object having the highest priority may be blinked, and the contour of the pointer 211a may be differentiated. On the other hand, when there are a plurality of moving objects, object IDs MDE_003, MDE_008 and MDE_xxx may be arranged on one side of the screen to allow an operator to more exactly distinguish the moving objects.

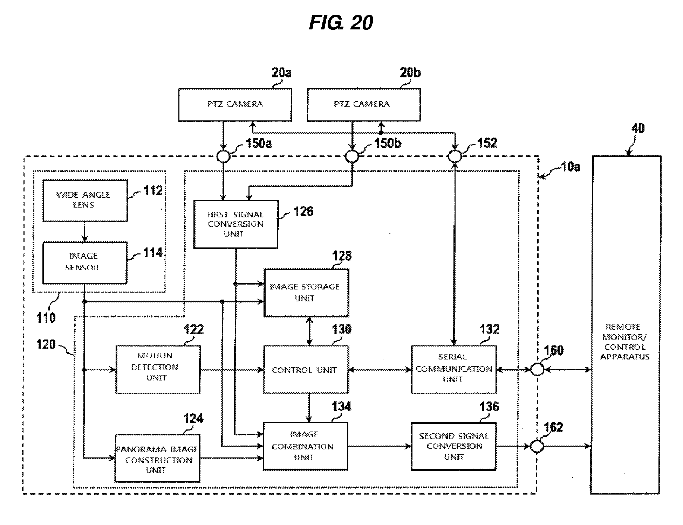

FIG. 20 illustrates a modified embodiment of the master camera 10 shown in FIG. 2. A plurality of slave cameras may be connected to a master camera 10a according to the present embodiment. Thus, the master camera 10a may control the plurality of slave cameras, and may receive centralized monitoring image signals from the respective slave cameras.

According to the present embodiment, the master camera 10a may include a plurality of image signal input terminals 150a and 150b. A first slave camera 20a may be connected to the first image signal input terminal 150a through a coaxial cable, and a second slave camera 20b may be connected to the second image signal input terminal 150b through a coaxial cable.
Serial communication units of the slave cameras 20a and 20b may be connected in common to a first serial port 152 of the master camera 10a. A serial communication unit 132 of the master camera 10a may selectively transmit control signals to the slave cameras 20a and 20b, by transmitting the control signal by time-division multiplexing or by specification of IDs or addresses of the slave cameras 20a and 20b.

A first signal conversion unit 126 may convert a first centralized monitoring image signal received from the first slave camera 20a through the first image signal input terminal 150a into a digital image signal. Also, the first signal conversion unit 126 may convert a second centralized monitoring image signal received from the second slave camera 20b through the second image signal input terminal 150b into a digital image signal. An image storage unit 128 may store digital centralized monitoring image signals and a wide-angle image signal.

The master camera 10a may detect a moving object from the wide-angle image 200, and may control one of the slave cameras 20a and 20b to intensively monitor a target area in which the moving object exists, according to the location of the detected moving object. As described above, camera IDs appropriate to each wide-angle image sector in which a motion can be detected may be mapped in a control value LUT 320 or a camera LUT 320a that is maintained by the control unit 130 so as to easily select one of the slave cameras 20a and 20b.

Under the control of the control unit 130, the image combination unit 134 may configure an output image by selecting at least one of a wide-angle image 200, a panorama image 210, a forward panorama image 212, a backward panorama image 214, and first and second centralized monitoring images. When a centralized monitoring image is included in the output image, only an image from a slave camera among the first and second centralized monitoring images may be included in the output image.

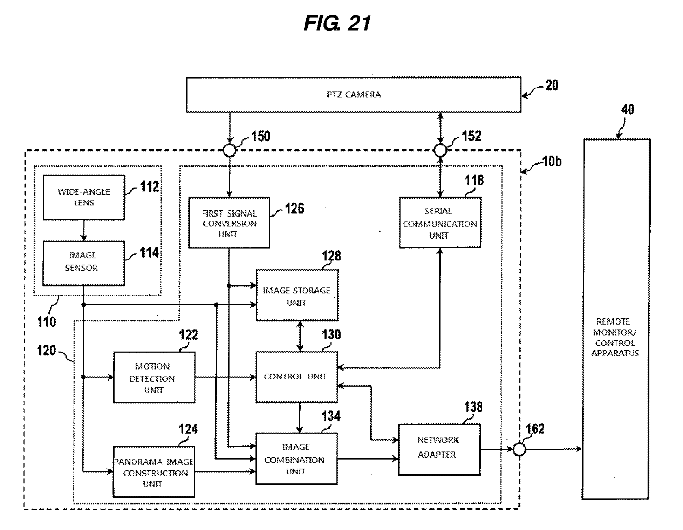

FIG. 21 illustrates another modified embodiment of the master camera 10 shown in FIG. 2. The master camera 10 shown in FIG. 2 may receive a camera control signal from the remote monitor/control apparatus 40 via a serial communication through the serial communication unit 132, and may transmit the state information of the master camera 10 and/or the slave camera 20 to the remote monitor/control apparatus 40 and transmit an output image configured by the image combination unit 134 to the remote monitor/control apparatus 40 through a coaxial cable in a form of composite video signal. On the other hand, a master camera 10b according to this embodiment may perform communication with the remote monitor/control apparatus 40 using a network protocol.

The master camera 10b may include a network adaptor 138 such as Ethernet interface card. The network adaptor 138 may be connected to the remote monitor/control apparatus 40 through a LAN cable. The network adaptor 138 may receive a camera control signal from the remote monitor/control apparatus 40 according to a TCP/IP protocol, and may transmit the state information of the master camera 10a and/or the slave camera 20 to the remote monitor/control apparatus 40. Also, the network adaptor 138 may transmit the output image configured by the image combination unit 134 to the remote monitor/control apparatus 40 in a form of digital signal.

According to the present embodiment, even when the master camera 10b is installed at a place distant from the remote monitor/control apparatus 40, the remote monitor/control apparatus 40 may easily control the master camera 10b through a network such as Internet, and may easily monitor a target area by receiving an image signal from the master camera 10b and the slave camera 20. Also, a plurality of master cameras 10b may be connected to the remote monitor/control apparatus 40, and interconnection necessary for the connection of the master cameras 10b may be minimized.

On the other hand, the slave camera 20 may provide a centralized monitoring image to the master camera 10b in a form of digital signal. In this case, the first signal conversion unit 126 of FIG. 21 may be omitted, and the master camera 10b may be operated by a full digital method.

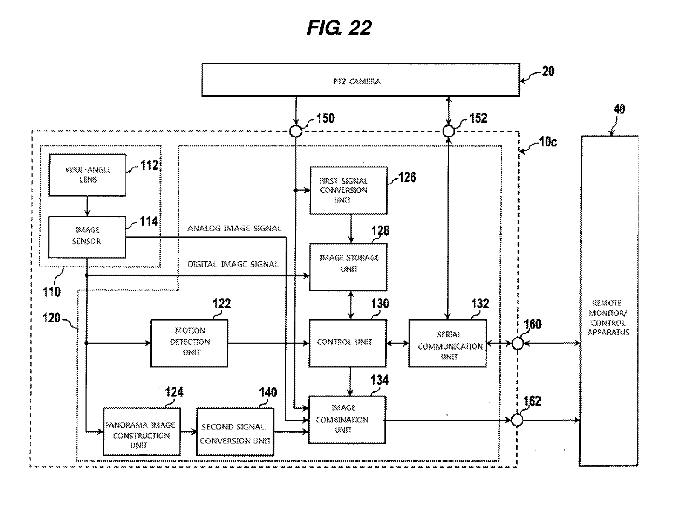

FIG. 22 illustrates still another modified embodiment of the master camera 10 shown in FIG. 2. In the present embodiment, the image combination unit 134 may generate an output image by combining images in a state of analog signal.

The wide-angle imaging unit 110 may output an analog wide-angle image signal in addition to a digital wide-angle image signal. If the image sensor 112 can output only the digital wide-angle image signal, an A/D converter may be additionally provided in the wide-angle imaging unit 110 or the control/signal-processing circuit 120.

The first signal conversion unit 126 may convert a centralized monitoring image signal received through the image signal input terminal 150 into a digital image signal. The image storage unit 128 may store a digital centralized monitoring image signal and a wide-angle image signal. The second signal conversion unit 140 may convert a digital panorama image signal from the panorama image construction unit 124 into an analog signal.

The image combination unit 134 may select at least one of a wide-angle image 200, a panorama image 210, a forward panorama image 212, a backward panorama image 214, and a centralized monitoring image, and may configure an output image by combining images in a state of analog signal. The image combination unit 134 may transmit the output image to the remote monitor/control apparatus 40 through the image signal output terminal 162 in a form of composite video signal.

As described above, since the camera apparatus shown in FIG. 2 and the modified embodiments thereof can process an image signal by various methods according to the format of an output signal of the centralized monitoring camera 20 or request for input of the image signal by the remote monitor/control apparatus 40, and can be linked with the remote monitor/control apparatus 40 through serial communication or network communication, various monitoring systems can be very easily employed without replacement of existing equipment. Since an output image can be provided to the remote monitor/control apparatus 40 in a type that is completely formatted by the master camera 10, computing load for high-speed signal processing at the remote monitor/control apparatus 40 can be alleviated. Also, a limitation due to the bandwidth of a transmission channel can be significantly reduced, and the amount of interconnection necessary for linkage of a plurality of centralized monitoring cameras 20 with the remote monitor/control apparatus 40 can be minimized.

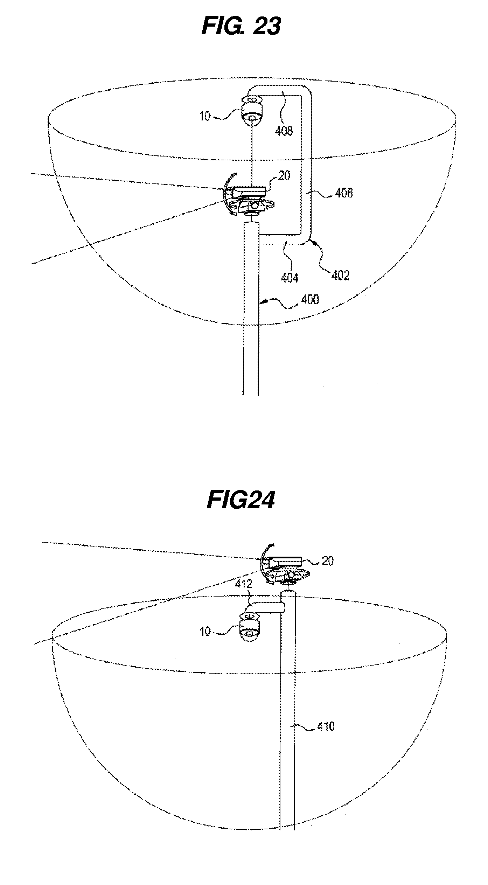

FIG. 23 illustrates an installation example of the master camera 10 and a slave camera 20.

In the present embodiment, a U-shaped support member 402 may be coupled to the circumferential surface of the upper side of a support 400. The U-shaped support member 402 may include a first horizontal bar 404, a vertical bar 406 bent from the end of the outer side of the first horizontal bar 404 and extending upward, and a second horizontal bar 408 bent inward and extending from the upper end of the vertical bar 406. The first horizontal bar 404 may be welded to the outer circumferential surface of the upper side of the support 400, or may be coupled to the outer circumferential surface of the support 400 using a U band bracket.

The slave camera 20, which is a PTZ camera, may be installed on the upper end of the support 400. The master camera 10, which is an omnidirectional camera, may be disposed on the under surface of the inner end of the second horizontal bar 408 of the U-shape support member 402. In this case, the master camera 10 may be disposed directly over the slave camera 20 such that the optical axis of the master camera 10 is aligned with the panning central axis of the slave camera 20.

According to the present embodiment, since the optical axis of the master camera 10 and the panning central axis of the slave camera 20 is in alignment with each other, in the process of motion detection and tracking and monitoring, the azimuth coordinate (θ) of the central point of a moving object in the wide-angle image 200 may be directly determined as a panning angle of a PTZ camera to control the slave camera 20.

Since the installation height of the master camera 10 can be controlled by adjusting the length of the vertical bar 406 of the U-shaped support member 402, the scope of the motion detection and tracking region can be controlled according to a demand of a user.

Although there is a blind spot in the monitoring of the master camera 10 due to the U-shaped support member 402 and the slave camera 20, the installation example of FIG. 23 may be usefully applied to monitoring offices that allow a partial blind spot and have a rear side closed or application fields using cameras with a panning/tilting drive unit with a limited rotation angle.

FIG. 24 illustrates another installation example of the master camera 10 and the slave camera 20.

In the present embodiment, an L-shaped support member 412 may be coupled to the circumferential surface of the upper side of a support 410. The L-shaped support member 412 may include a horizontal bar and a vertical bar bent downwardly from the end of the outer side of the horizontal bar. The horizontal bar may be welded to the outer circumferential surface of the upper side of the support 410, or may be coupled to the outer circumferential surface of the support 410 using a U band bracket.

The master camera 10 may be installed at the lower end of the vertical bar of the L-shaped support member 412, and the slave camera 20 may be installed on the upper end of the support 400.

According to the present embodiment, a 360° reflection mirror that can acquire an image having a smaller distortion than a fish-eye lens may be easily applied to the imaging unit 110 of the master camera 10. Also, the scope of a target area for monitoring may be controlled according to a demand of a user by adjusting the installation height of the master camera 10.

Although there is a blind spot in the monitoring of the slave camera 10 due to the L-shaped support member 412 and the master camera 10, and there is also a blind spot in the monitoring of the master camera 10 due to the L-shaped support member 412, the installation example of FIG. 24 may be usefully applied to monitoring offices that allow a partial blind spot and have a rear side closed or monitoring offices that are not affected by a low location of the master camera 10.

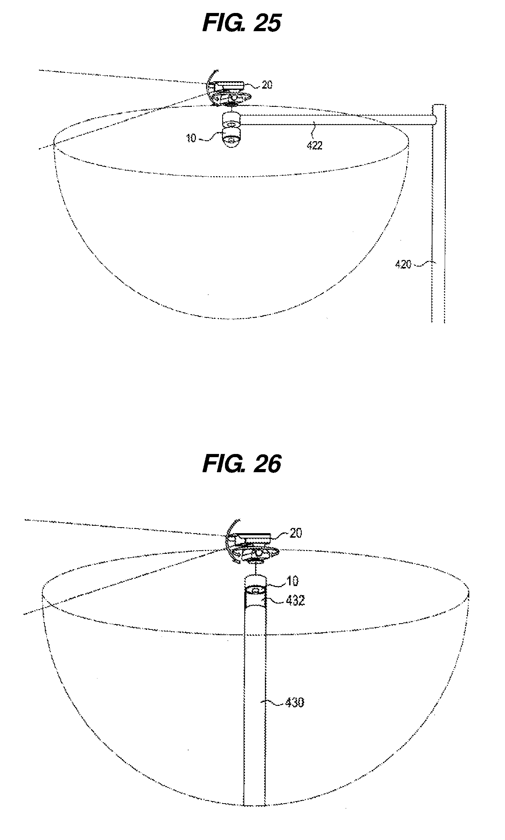

FIG. 25 illustrates another example of the master camera 10 and the slave camera 20.

A horizontal bar 422 may be coupled to the outer circumferential surface of the upper side of a support 420. The master camera 10 may be disposed under the outer end of the horizontal bar 422 by a bracket (not shown), and the slave camera 20 may be disposed over the outer end of the horizontal bar 422 such that the slave camera 20 is disposed directly over the master camera 10. The installation height of the horizontal bar 422 on the support 420 may be arbitrarily selected by a user in consideration of the scope of a target area for monitoring.

Since the optical axis of the master camera 10 and the panning central axis of the slave camera 20 is in alignment with each other, in the process of motion detection and tracking and monitoring, the azimuth coordinate (θ) of the central point of a moving object in the wide-angle image 200 may be directly determined as a panning angle of a PTZ camera to control the slave camera 20. In this installation example a blind spot of each camera can be minimized.

FIG. 26 illustrates another installation example of the master camera 10 and the slave camera 20.

A camera installation chamber 432 may be provided to the upper side of a support 430. The camera installation chamber 432 may have wall surfaces formed of transparent tempered glass or reinforced plastic. The master camera 10 may be downwardly disposed on the ceiling of the camera installation chamber 432. The slave camera 20 may be disposed over the upper end of the support 430 such that the slave camera 20 is disposed directly over the master camera 10. The height of the support 430 and the location of the camera installation chamber 432 may be selected in consideration of the scope of a target area for monitoring and the scope of a blind spot.

Also in the present embodiment, since the optical axis of the master camera 10 and the panning central axis of the slave camera 20 is in alignment with each other, in the process of motion detection and tracking and monitoring, the azimuth coordinate (θ) of the central point of a moving object in the wide-angle image 200 may be directly determined as a panning angle of a PTZ camera to control the slave camera 20.

According to the present installation example, there may be a blind spot in the monitoring of the master camera 10 due to the support 430 under the camera installation chamber 432, reduction of image quality due to light transmittance of the outer wall of the camera installation chamber 432, and addition consideration factors such as weight limitation of the slave camera 20. However, the present installation example may be usefully applied to a relay of a video conference, monitoring offices that are not affected by low installation location, or monitoring offices that need remote motion detection and tracking.

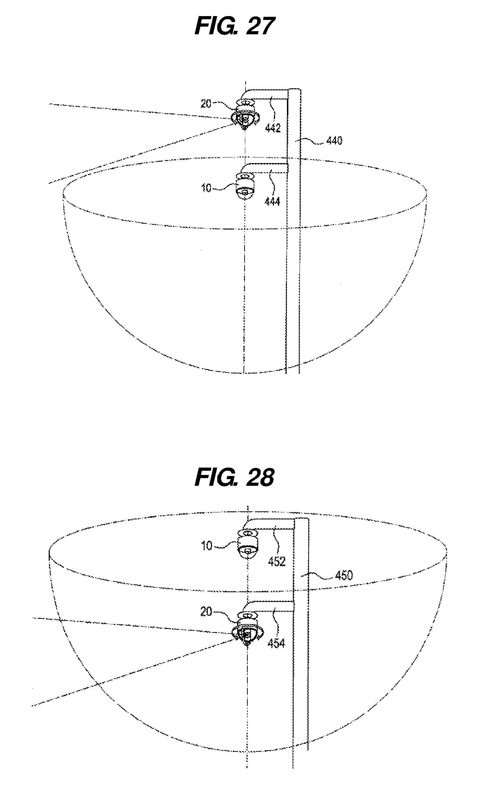

FIG. 27 illustrates another installation example of the master camera 10 and the slave camera 20.

A first support member 422 having an L-shape may be coupled to the outer circumferential surface of the upper side of a support 440, and a second support member 444 may be coupled to the outer circumferential surface of the support 440 under the first support member 442. The first and second support members 442 and 444 may be welded to the outer surface of the support 440, or may be coupled using a U band bracket.

The slave camera 20 may be disposed under a vertical bar of the first support member 442, and the master camera 10 may be disposed under a vertical bar of the second support member 444. The height of the master camera 10 may be selected in consideration of the scope of a target area and the scope of a blind spot.

Also in the present embodiment, since the optical axis of the master camera 10 and the panning central axis of the slave camera 20 is in alignment with each other, in the process of motion detection and tracking and monitoring, the azimuth coordinate (θ) of the central point of a moving object in the wide-angle image 200 may be directly determined as a panning angle of a PTZ camera to control the slave camera 20. Also, a 360° reflection mirror that can acquire an image having a smaller distortion than a fish-eye lens may be easily applied to the imaging unit 110 of the master camera 10.

The present installation example may be suitable for monitoring offices that allow a partial blind spot and have a rear side closed and monitoring offices that are not affected by a low location of the master camera 10.

FIG. 28 illustrates another installation example of the master camera 10 and the slave camera 20.

A first support member 452 having an L-shape may be coupled to the outer circumferential surface of the upper side of a support 450, and a second support member 454 may be coupled to the outer circumferential surface of the support 450 under the first support member 452. The first and second support members 452 and 454 may be welded to the outer circumferential surface of the support 450, or may be coupled using a U band bracket.

The master camera 10 may be disposed under a vertical bar of the first support member 452, and the slave camera 20 may be disposed under a vertical bar of the second support member 454. The height of the master camera 10 may be selected in consideration of the scope of a target area and the scope of a blind spot.

Also in the present embodiment, since the optical axis of the master camera 10 and the panning central axis of the slave camera 20 is in alignment with each other, in the process of motion detection and tracking and monitoring, the azimuth coordinate (θ) of the central point of a moving object in the wide-angle image 200 may be directly determined as a panning angle of a PTZ camera to control the slave camera 20.

The present installation example may be suitable for monitoring offices that allow a partial blind spot and have a rear side closed and application field using cameras with a panning/tilting drive unit with a limited rotation angle.

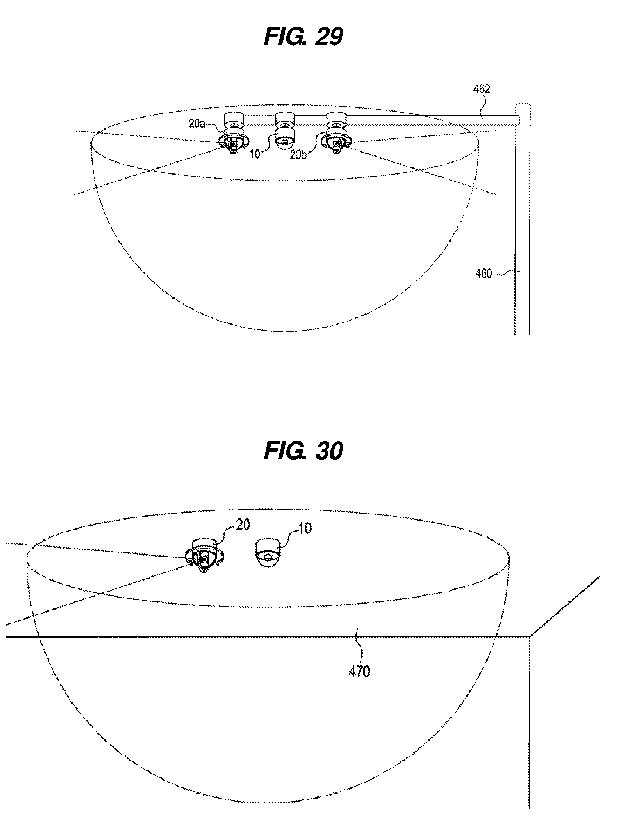

FIG. 29 illustrates another installation example of the master camera 10 and the slave camera 20.

A horizontal bar 462 may be coupled to the outer surface of the upper side of a support 460. The master camera 10 may be disposed on the undersurface of the vertical bar 462 at one point thereof. At least one slave camera 20a and 20b may be disposed on the undersurface of the horizontal bar 462 at the inner side or outer side of the point where the master camera 10 is disposed. The slave camera 20a and 20b may be disposed at one or both sides of the master camera 10.

When the master camera 10 and the slave camera 20a and 20b are disposed in parallel to each other, a blind spot may occur due to mutual interference between cameras. However, when the horizontal bar 462 is sufficiently high, such interference may be ignored. Accordingly, the present installation example may be usefully applied to a monitoring office at a high place.

FIG. 30 illustrates another installation example of the master camera 10 and the slave camera 20. The present installation example may be suitable for an indoor monitoring office. The master camera 10 and the slave camera 20 may be disposed on the ceiling of the interior of a building side by side. Although there may be a blind spot due to mutual interference between the master camera 10 and the slave camera 20, such interference may be ignored in the interior for monitoring a region lower than the cameras 10 and 20.

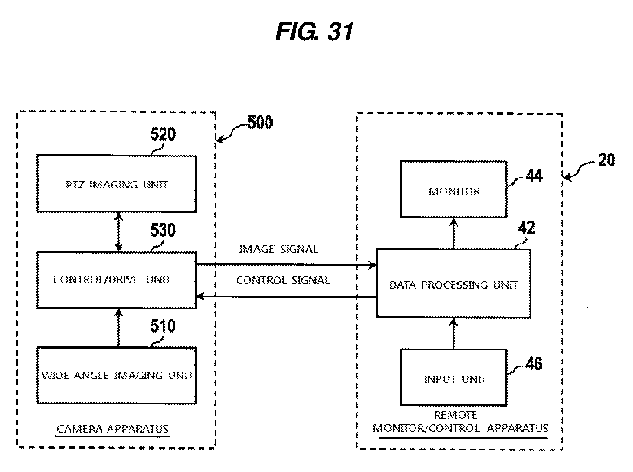

FIG. 31 illustrates an image monitoring system according to another embodiment of the present invention. The image monitoring system may include a multi-functional camera apparatus 500 and a remote monitor/control apparatus 40.

The camera apparatus 500, which is incorporated with an omnidirectional camera and a PTZ camera, may include a wide-angle unit 510, a PTZ imaging unit 520, and a control/drive unit 530. The wide-angle imaging unit 510 may omnidirectionally photograph a target area, and the control/drive unit 530 may detect a moving object from an omnidirectional image and control a PTZ imaging unit 520 to intensively photograph a region where the moving object is detected. Also, the control/drive unit 530 may create an output image by combining a centralized monitoring image and an omnidirectional image that are acquired by the PTZ imaging unit 520, and may provide the output image to the remote monitor/control apparatus 40 as an analog image signal or a digital image signal.

The remote monitor/control apparatus 40 may be disposed at a place distant from the camera apparatus 500, and may include a data processing unit 42, a monitor 44, and an input unit 46. The data processing unit 42 may receive an output image from the camera unit 500 to display it on the monitor. Also, the data processing unit 42 may control the camera apparatus 500 according to a user's input that is inputted through the input unit 46. The data processing unit 42 may be implemented with a typical PC, and may further include a matrix, a screen divider, and an image distribution amplifier. The input unit 46 may include one of keyboard, mouse, joystick, or a combination thereof.

In FIG. 31, although only one camera apparatus 500 is connected to the remote monitor/control apparatus 40 for simplicity and clarity of explanation, a plurality of camera apparatus 500 may be connected to the remote monitor/control apparatus 40.

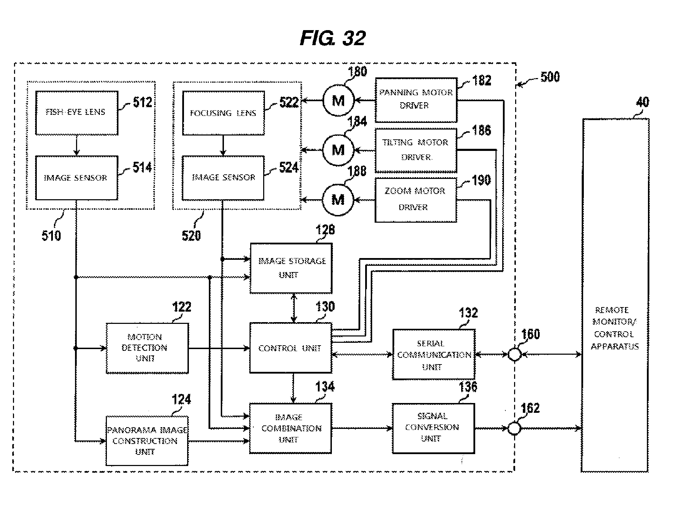

FIG. 32 illustrates a camera apparatus 500 according to an embodiment of the present invention.

A wide-angle imaging unit 510 may electro-optically include a fish-eye lens 512 and a first image sensor 514. The viewing angle of the fish-eye lens 512 may be omnidirectionally equal to or greater than about 150 degrees, and the fish-eye lens 512 may concentrate light incident from a space within the viewing angle to form an image on a first image sensor 514. The first image sensor 514 may include a CMOD or CCD and an A/D convertor, and may convert and digitize light concentrated by the fish-eye lens 512 into an electrical image signal to output a digital wide-angle image signal. The wide-angle image acquired by the fish-eye lens 512 may be circular.

The PTZ imaging unit 520 may include a focusing lens 522 and a second image sensor 524. The focusing lens 522 may concentrate light incident from the front side, and the second image sensor 524 may convert and digitize the light concentrated by the focusing lens 522 into an electrical image signal to output a digital centralized monitoring image signal.

In a control/drive unit, a moving detection unit 122 may receive a wide-angle image signal from the wide-angle imaging unit 510, and may compare the wide-angle image by unit frame to determine whether a moving object exists in the wide-angle image. Here, the compared frames may be successive frames, and may be frames that are temporally separated by a cycle of multiple frames.

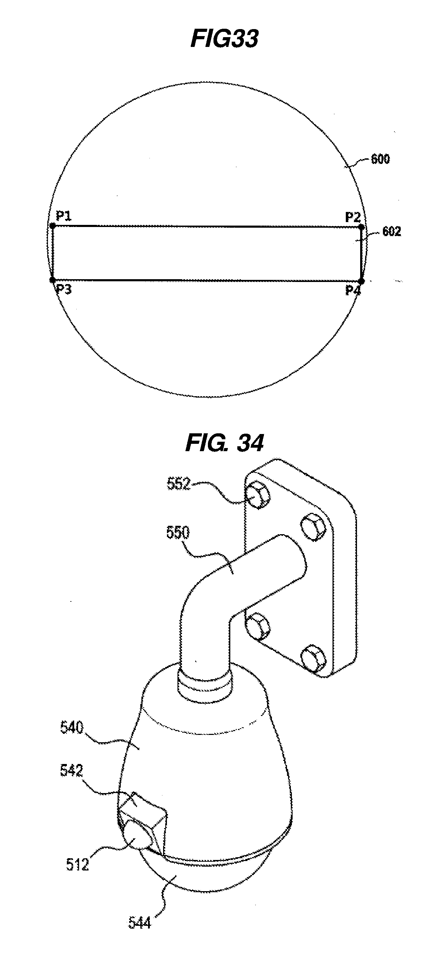

A panorama image construction unit 124 may convert the wide-angle image from the wide-angle imaging unit 110 into a rectangular panorama image. FIG. 33 illustrates a panorama image construction method by the panorama image construction unit 124. As described above, the wide-angle image 600 photographed by the wide-angle imaging unit 510 including the fish-eye lens 512 may be circular. In one embodiment, the panorama image construction unit 124 may select only a rectangular portion from the circular wide-angle image 600, and may output an image signal regarding the selected image region 610 as a panorama image signal. The region taken as the panorama image 610 may be fixed or vary according to the motion detection. Also, an operator may select a region by designating two points P1 and P4 or P2 and P3 diagonal to each other through the input unit 46 of the remote monitor/control apparatus 40. In this case, a region selection unit 102 may receive a region set signal representing the coordinates of two points P1 and P4 or P2 and P3 through a control unit 104, and in response thereto, may extract the panorama image 610 from the wide-angle image 600.

Referring again to FIG. 32, an image storage unit 128 may include a storage medium such as hard disk or SSD, and may store a digital centralized monitoring image signal and a wide-angle image signal. The image storage unit 128 may also store a compressed image signal instead of the original image signal. In this embodiment, the image storage unit 128 may further include a compression/decompression unit for compressing the original image signal or decompressing a compressed image signal. The compression/decompression unit may be implemented by a computer program that is executed on a microprocessor for implementing a control unit 130.

The control unit 130 may control the overall operation of the camera apparatus 500. Particularly, the control unit 130 may control panning-tilting-zooming operations of the PTZ imaging unit 520 according to a moving object detected by the motion detection unit 122. Also, the control unit 130 may change the construction of the output image by controlling an image combination unit 134 according to a camera control signal. In addition, the control unit 130 may allow an image signal stored in the image storage unit 128 to be read out and provided to the remote monitor/control apparatus 40 according to the camera control signal. The basic control operation of the control unit 130 may be performed by a computer program, and may also be performed in response to a camera control signal received from the remote monitor/control apparatus 40.

The serial communication unit 132 may allow the control unit 130 to communicate with the remote monitor/control apparatus 40 through a serial port 160. In other words, the control unit 130 may receive a camera control signal from the remote monitor/control apparatus 40 through the serial communication unit 132, and may transmit the state information of the camera apparatus 500 to the remote monitor/control apparatus 40. The connection between the serial communication unit 132 and the remote monitor/control apparatus 40 may be performed according to RS232C, RS422 or RS485 standards.

The image combination unit 134 may select at least one of the wide-angle image 600, the panorama image 610, and the centralized monitoring image to configure an output image. In the present embodiment, since the output image is similar to that of FIG. 5, a detailed description thereof will be omitted. A signal conversion unit 132 may generate a composite video signal regarding the output image configured by the image combination unit 134, and may transmit the composite video signal to the remote monitor/control apparatus 40 through an image signal output terminal 162. Thus, the output image configured by the image combination unit 134 may be displayed on the monitor 44 of the remote monitor/control apparatus 40.

On the other hand, a panning motor driver 182 may drive a panning motor 180 under the control of the control unit 132 to mechanically rotate the PTZ imaging unit 520 including the focusing lens 522 and the image sensor 524 in a horizontal direction. A tilting motor driver 186 may drive a tilting motor 184 under the control unit 132 to rotate the PTZ imaging unit 520 in a vertical direction. A zoom motor driver 190 may drive a zoom motor 188 under the control of the control unit 132 to vary the focal length of the focusing lens 522 and perform zoom-in/zoom-out functions. When the motor drivers 182, 186 and 190 are driven based on the result of the moving object detection, the PTZ imaging unit 520 may acquire a tracking/monitoring image regarding a moving object.

FIG. 34 is a perspective view illustrating the camera apparatus 500 of FIG. 32 according to an embodiment of the present invention.

The camera apparatus 500 may include a housing 540 having a substantial bell-shape and formed of a metal or synthetic resin material and a dome 544 disposed under the housing 540 and housing a PTZ imaging unit 520. The fish-eye lens 512 of the wide-angle imaging unit 510 may be disposed on the outer circumferential surface of a lower side of the housing, and may be exposed to the outside by the medium of a support projection 542. A bracket 550 may be provided on the upper surface of the housing 540 to couple the camera apparatus 500 to a wall.

The support projection 542 may be disposed on the outer circumferential surface of a lower side of the housing 540 such that the optical axis of the fish-eye lens 512 faces the lower side of the camera apparatus 500 in an outward direction. The support projection 542 may determine the photographing direction of the wide-angle imaging unit 510, support the wide-angle imaging unit 510 structurally, and allow the wide-angle imaging unit 510 to photograph the surroundings including a point directly under the camera apparatus 540.

The bracket 550 may be formed of a metal material, and may include a vertical part having a lower end coupled to the upper surface of the housing 540, a horizontal part bent backward from an upper end of the vertical part in a horizontal direction, and an attachment plate provided at the rear end of the horizontal part. A plurality of holes may be formed in the attachment plate to allow the attachment plate to be coupled to a support or a wall.

Since other features of the camera apparatus 500 shown in FIGS. 32 and 34 are similar to the features of the master camera 20 shown in FIG. 2, a detailed description thereof will be omitted.

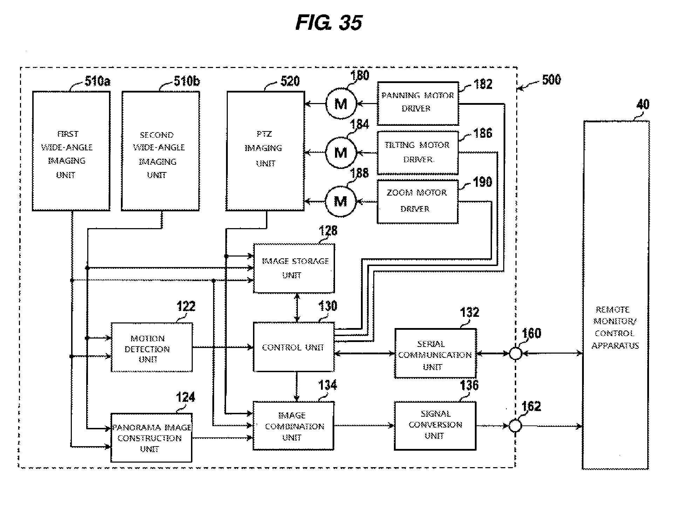

FIG. 35 is a block diagram illustrating the camera apparatus 500 of FIG. 31 according to another embodiment of the present invention.

According to the present embodiment, the camera apparatus 500 may include two optical imaging units 512a and 512b. As described later, the optical imaging units 512a and 512b may be symmetrically disposed in a horizontal direction to face opposite directions to each other, and may acquire omnidirectional images, respectively. The construction of the respective optical imaging units 512a and 512b may be similar to that of the optical imaging unit 512 shown in FIG. 32. On the other hand, the PTZ imaging unit 520 of FIG. 35 may be similar to that of FIG. 32 in construction and function.

A motion detection unit 122 may receive wide-angle image signals from the optical imaging units 512a and 512b, and may determine whether a moving object exists in the respective wide-angle image.

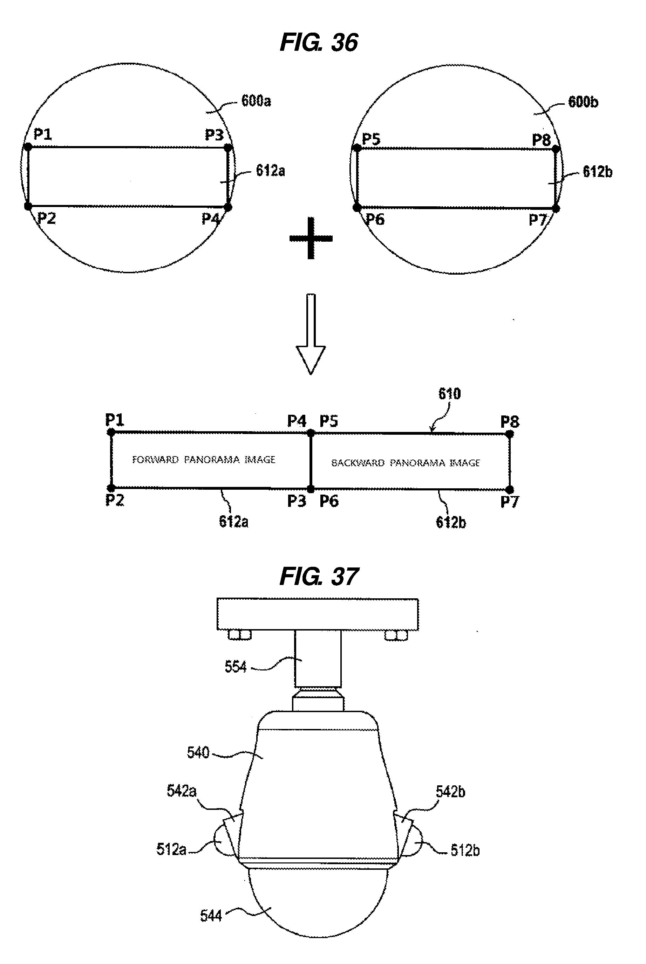

A panorama image construction unit 124 may convert the wide-angle images from the optical imaging units 512a and 512b into rectangular panorama images. Referring to FIG. 36, wide-angle images 600a and 600b photographed by the optical imaging units 512a and 512b, respectively, may be circular. The panorama image construction unit 124 may select rectangular portions 612a and 612b from the circular wide-angle images 600a and 600b, respectively, and may connect the rectangular portions 612a and 612b to each other.

In regard to the present embodiment, the image 612a extracted from the wide-angle image 600a in a rectangular shape will be referred to as a forward panorama image, and the image 612b extracted from the wide-angle image 600b in rectangular shape will be referred to as a backward panorama image. The image 610 in which the forward panorama image 612a and the backward panorama image 612b are connected in a horizontal direction will be referred to as a panorama image. In the drawing, points P1 to P8 may represent corresponding points of the wide-angle images 600a and 600b, and the forward panorama image 612a and the backward panorama image 612b. The width of the forward panorama image 612a and the backward panorama image 612b may be equal to the width of a centralized monitoring image from the PTZ imaging unit 520. However, in a modified embodiment, the width of the panorama image 610 may also be equal to the width of the centralized monitoring image.

Referring again to FIG. 35, a storage unit 128 may store a digital centralized monitoring image signal and a wide-angle image signal. The image storage unit 128 may also store a compressed image signal instead of the original image signal. In this embodiment, the image storage unit 128 may further include a compression/decompression unit for compressing the original image signal or decompressing a compressed image signal. The compression/decompression unit may be implemented by a computer program that is executed on a microprocessor for implementing a control unit 130.

The control unit 130 may control the overall operation of the camera apparatus 500. Particularly, the control unit 130 may control panning-tilting-zooming operations of the PTZ imaging unit 520 according to a moving object detected by the motion detection unit 122. Also, the control unit 130 may change the construction of the output image by controlling an image combination unit 134 according to a camera control signal. In addition, the control unit 130 may allow an image signal stored in the image storage unit 128 to be read out and provided to the remote monitor/control apparatus 40 according to the camera control signal. The basic control operation of the control unit 130 may be performed by a computer program, and may also be performed in response to a camera control signal received from the remote monitor/control apparatus 40.

The image combination unit 134 may select at least one of the wide-angle images 600a and 600b, the forward panorama image 612a, the backward panorama image 612b, and the centralized monitoring image to configure an output image. A signal conversion unit 132 may generate a composite video signal regarding the output image configured by the image combination unit 134, and may transmit the composite video signal to the remote monitor/control apparatus 40 through an image signal output terminal 162. Thus, the output image configured by the image combination unit 134 may be displayed on the monitor 44 of the remote monitor/control apparatus 40.

FIG. 37 is a side view illustrating the camera apparatus 500 of FIG. 35 according to an embodiment of the present invention.

The camera apparatus 500 may include a housing 540 having a substantial bell-shape and formed of a metal or synthetic resin material and a dome 544 disposed under the housing 540 and housing a PTZ imaging unit 520. Two support projections 542a and 542b may be symmetrically provided on the outer circumferential surface of a lower side of the housing 540 in a horizontal direction. A fish-eye lens 512a of a first wide-angle imaging unit 510a may be disposed on the support projection 542a and may be exposed to the outside. A fish-eye lens 512b of a second wide-angle imaging unit 510b may be disposed on the support projection 542b and may be exposed to the outside. A bracket 554 may be provided on the upper surface of the housing 540 to couple the camera apparatus 500 to a wall surface.

The support projections 542a and 542b may be disposed on the outer circumferential surface of a lower side of the housing 540 such that the optical axes of the fish-eye lenses 512a and 512b faces the lower side of the camera apparatus 500 in an outward direction. The support projections 542a and 542b may determine the photographing direction of the wide-angle imaging units 510a and 510b, support the wide-angle imaging units 510a and 510b structurally, and allow the wide-angle imaging units 510a and 510b to photograph the surroundings including a point directly under the camera apparatus 540.

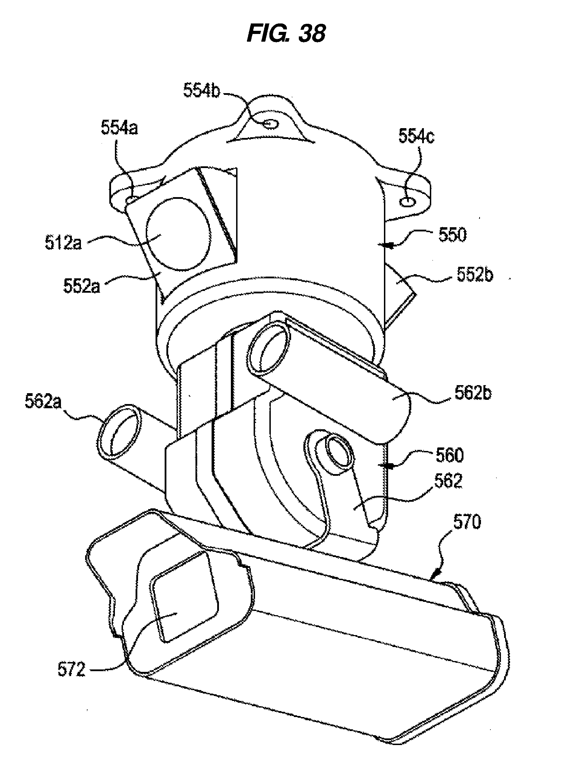

FIG. 38 is a bottom perspective view illustrating the camera apparatus 500 of FIG. 35 according to another embodiment of the present invention.

The camera apparatus 500 may include an upper frame 550, a horizontal rotation frame 560, and a PTZ camera apparatus 570.

The upper frame 550 may have a cylindrical shape of a substantially circular or polygonal section. Two support projections 552a and 552b may be symmetrically provided on the outer circumferential surface of a lower side of the upper frame 550 in a horizontal direction. A plurality of support/coupling projections 554a to 554c with a through hole may be disposed on an upper portion of the side surface of the upper frame 550 to allow the upper frame 550 to be stably supported on an installation surface and fixed on the installation surface by bolts.

A fish-eye lens 512a of a first wide-angle imaging unit 510a may be disposed on the support projection 552a to be exposed to the outside, and a fish-eye lens 512b of a second wide-angle imaging unit 510b may be disposed on the support projection 552b to be exposed to the outside. The surfaces of the support projections 552a and 552b on which the fish-eye lenses 512a and 512b may be inclined such that the wide-angle imaging units 510a and 510b can photograph up to the lower side of the camera apparatus 500 within a range in which the viewing angle is not interrupted by the PTZ camera apparatus 570.

The horizontal rotation frame 560 may be disposed on the undersurface of the upper frame so as to perform panning with respect to the upper frame 550, i.e., rotate in a horizontal direction. A panning motor may be disposed in the upper frame 550 such that the horizontal rotation frame 560 can horizontally rotate under the upper frame 550. A panning shaft (not shown) may be mechanically connected to the panning motor. The horizontal rotation frame 560 and the upper frame 550 may be connected to each other via the panning shaft.

The PTZ camera apparatus 570 may be disposed to perform tilting, i.e., vertically rotate under the horizontal rotation frame 560. In the present embodiment, a tilting motor may be disposed in the horizontal rotation frame 560. A tilting shaft (not shown) may be connected to the tilting motor to cross the horizontal rotation frame 560 in a horizontal direction. A bracket 562 may be pivotably connected to both ends of the tilting shaft, and the PTZ camera apparatus 570 may be fixedly disposed under the bracket 562. Since specific construction and connection relation of the panning motor and the panning shaft and specific construction and connection relation of the tilting motor and the tilting shaft are well known to and can be easily implemented by those skilled in the art, a detailed description thereof will be omitted.

A transparent window 572 may be provided on the front surface of the PTZ camera apparatus 570 to protect a lens while transmitting light. On the other hand, LED lights 562a and 562b may be disposed on both sides of the horizontal rotation frame 560 to irradiate lighting to the front side at night.

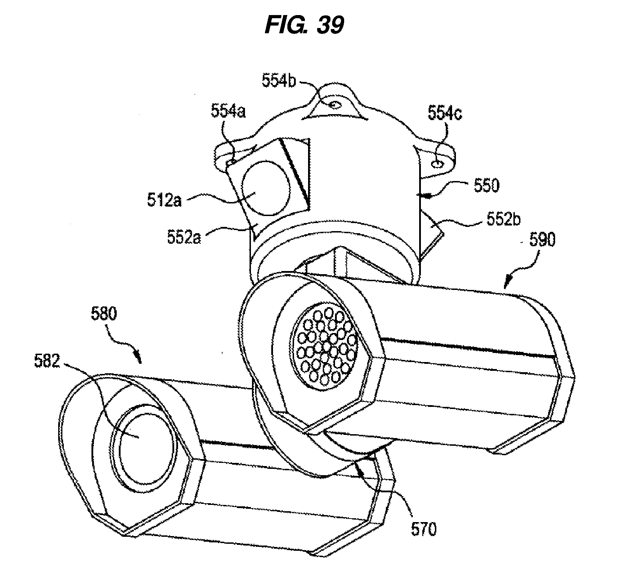

FIG. 39 is a bottom perspective view illustrating the camera apparatus 500 of FIG. 35 according to another embodiment of the present invention.

The camera apparatus 500 may include an upper frame 550, a horizontal rotation frame 560, a PTZ camera apparatus 580, and an LED light 590.

The upper frame 550 may have a cylindrical shape of a substantially circular or polygonal section. Two support projections 552a and 552b may be symmetrically provided on the outer circumferential surface of a lower side of the upper frame 550 in a horizontal direction.

A plurality of support/coupling projections 554a to 554c with a through hole may be disposed on an upper portion of the side surface of the upper frame 550 to allow the upper frame 550 to be stably supported on an installation surface and fixed on the installation surface by bolts.

A fish-eye lens 512a of a first wide-angle imaging unit 510a may be disposed on the support projection 552a to be exposed to the outside, and a fish-eye lens 512b of a second wide-angle imaging unit 510b may be disposed on the support projection 552b to be exposed to the outside. The surfaces of the support projections 552a and 552b on which the fish-eye lenses 512a and 512b may be inclined such that the wide-angle imaging units 510a and 510b can photograph up to the lower side of the camera apparatus 500 within a range in which the viewing angle is not interrupted by the PTZ camera apparatus 580.

The horizontal rotation frame 560 may be disposed on the undersurface of the upper frame so as to perform panning with respect to the upper frame 550, i.e., rotate in a horizontal direction. A panning motor may be disposed in the upper frame 550 such that the horizontal rotation frame 560 can horizontally rotate under the upper frame 550. A panning shaft (not shown) may be mechanically connected to the panning motor. The horizontal rotation frame 560 and the upper frame 550 may be connected to each other via the panning shaft.

The PTZ camera apparatus 580 may be disposed to perform tilting at the side of the horizontal rotation frame 560. In the present embodiment, a tilting motor may be disposed in the horizontal rotation frame 560. A tilting shaft (not shown) may be connected to the tilting motor to cross the horizontal rotation frame 560 in a horizontal direction. The PTZ camera apparatus 580 may be disposed at one end of the tilting shaft, and the LED light 590 may be disposed at the other end thereof. Thus, when the tilting motor and the tilting shaft rotate, the PTZ camera apparatus 580 and the LED light 590 may vertically rotate in response thereto. In addition, since the PTZ camera apparatus 580 and the LED light 590 are balanced to a certain extent, damage of the camera apparatus due to unbalance of the load can be prevented. On the other hand, a transparent window 582 may be provided on the front surface of the PTZ camera apparatus 580 to protect the lens while transmitting light.

Since other features of the camera apparatus 500 shown in FIGS. 35 through 39 are similar to those of the camera apparatus shown in FIG. 32, a detailed description thereof will be omitted.

Although preferred embodiments of the present invention have been described as above, the present invention may be modified into various types without changing the technical spirit or the essential features thereof and may be implemented into other specific forms.

For example, although it has been described that the image combination unit 134 configures an output image by combining at least one of the wide-angle image 200, the forward panorama image 212, the backward panorama image 214, the panorama image 210, and the centralized monitoring image signal 220, the camera apparatus may allow the remote monitor/control apparatus 40 to configure an output image by transmitting the image signals to the remote monitor/control apparatus 40 using a multiplexer instead of combining the image signals.

When a plurality of centralized monitoring cameras are connected to one master camera 10, all or a portion of the centralized monitoring cameras may be fixed cameras, not PTZ cameras. In this case, the master camera 10 may select only an image from a camera photographing a region where a moving object exists among the plurality of centralized monitoring cameras as a centralized monitoring image. Also in this embodiment, the respective centralized monitoring cameras may have a zoom function.

Although it has been described that the master camera 10 detects a moving object from a wide-angle image and controls the slave camera 20 according to the location of the detected moving object, in a modified embodiment, the moving object detection may also be performed by the remote monitor/control apparatus 40. In this embodiment, the master camera 10 may receive location information of the moving object or PTZ control information from the remote monitor/control apparatus 40, and thus control the slave camera 20.

On the other hand, the image storage unit 126 may also store a panorama image instead of the original wide-angle image.

Also, although it has been described that the master camera 10 or the camera apparatus 500 transmits a centralized monitoring image or an output image including the centralized monitoring image to the remote monitor/control apparatus 40, in a modified embodiment, a centralized monitoring image may also be allowed to be transmitted to the remote monitor/control apparatus 40 by a centralized monitoring camera while the master camera 10 or the camera apparatus 500 is performing a control function for the centralized monitoring camera.

While various embodiments have been described as above, features described in one exemplary embodiment can be applied to other embodiments unless it is essentially impossible. Also, features described in the respective exemplary embodiments can be combined in one embodiment. For example, although it has been described in the embodiments that the master camera 10 or the camera apparatus 500 transmits an output image to the remote monitor/control apparatus 40 through serial communication or TCP/IP-based network, in another embodiment, the master camera 10 or the camera apparatus 500 may have all functions for communicating with the master camera 10 through serial communication and TCP/IP-based network. On the other hand, the master camera 10 or the camera apparatus 500 may also transmit an output image signal to the remote monitor/control apparatus 40 in a form of digital image data, not analog image signal. Also, the master camera 10 may receive a centralized monitoring image from the slave camera 20 in a form of digital signal, not analog signal.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Industrial Applicability**

The present invention may be applied to all application fields that require omnidirectional monitoring and centralized monitoring. Particularly, it is possible to efficiently monitor a target area while reducing the load of a remote monitor/control apparatus in an application field in which a plurality of cameras are used.

**Claims**

1. A monitoring camera apparatus for acquiring a monitoring image to be displayed on a remote control apparatus and controlling a centralized monitoring imaging unit without assistance of the remote control apparatus, the apparatus comprising:

   a wide-angle imaging unit for acquiring a wide-angle image regarding a target area;
   a control and signal-processing unit for detecting a location of a moving object from the wide-angle image, controlling the centralized monitoring imaging unit to photograph the moving object by generating a control signal corresponding to information on the location of the moving object, and receiving a centralized monitoring image acquired by the centralized monitoring imaging unit; and
   a signal transmission unit for transmitting the monitoring image comprising the centralized monitoring image to the remote control apparatus.

2. The monitoring camera apparatus of claim 1, wherein the control and signal-processing unit outputs the control signal according to location information of one image sector associated with the moving object among a plurality of image sectors constituting the wide-angle image.

3. The monitoring camera apparatus of claim 2, wherein the control and signal-processing unit outputs a certain preset code to the centralized monitoring imaging unit as the control signal according to the location information of the moving object to allow the centralized monitoring imaging unit to control a photographing direction according to the preset code.

4. The monitoring camera apparatus of claim 2, wherein the control and signal-processing unit outputs panning and tilting control values regarding the centralized monitoring imaging unit to the centralized monitoring imaging unit as the control signal according to the location information of the moving object.

5. The monitoring camera apparatus of claim 2, wherein the control and signal-processing unit compares a previously photographed wide-angle image and a current wide-angle image by unit of multiple image sectors, and if a calculation value of a variation of a pixel value is equal to or greater than a certain reference value in the respective image sectors, determines that the image sector is associated with the moving object.

6. The monitoring camera apparatus of claim 5, wherein if the calculation value of the variation of the pixel value is equal to or greater than the reference value in two or more image sectors adjacent to each other, the control and signal-processing unit determines that an image sector having a maximum calculation value of the variation of the pixel value is associated with the moving object.

7. The monitoring camera apparatus of claim 2, wherein the control and signal-processing unit compares a previously photographed wide-angle image and a current wide-angle image to detect the moving object, and determines the associated image sector by determining whether a specific coordinate of the moving object pertains to the associated image sector among the multiple image sectors.

8. The monitoring camera apparatus of claim 2, wherein the control and signal-processing unit detects the moving object from the wide-angle image, determines a location of a central point of the moving object in the wide-angle image as a form of polar coordinate, and outputs the control signal according to the polar coordinate.

9. The monitoring camera apparatus of claim 8, wherein the control and signal-processing unit determines a size of the moving object and comprises a zoom ratio control value corresponding to the size in the control signal.

10. The monitoring camera apparatus of claim 1, further comprising:

    a panorama image construction unit for constructing a panorama image from the wide-angle image; and
an image combination unit for combining the centralized monitoring image received from the centralized monitoring imaging unit,
wherein the signal transmission unit transmits the combined image to the remote control apparatus as the monitoring image.

11. The monitoring camera apparatus of claim 10, wherein the image combination unit formats the panorama image and the centralized monitoring image into one output image that is displayed on a display of the remote control apparatus.

12. The monitoring camera apparatus of claim 10, wherein the signal transmission unit comprises:

    a signal conversion unit for converting a digital image signal regarding the output image into an analog output image signal;
    an image output terminal for transmitting the analog output image signal to the remote control apparatus; and
    a serial communication unit for receiving a unit control signal from the remote control apparatus.

13. The monitoring camera apparatus of claim 10, wherein the image combination unit multiplexes the panorama image signal and the centralized monitoring image signal, and the signal transmission unit transmits a multiplexed image signal to the remote control apparatus.

14. The monitoring camera apparatus of claim 10, wherein the signal transmission unit comprises a network adapter for transmitting the output image to the remote control apparatus through a network.

15. The monitoring camera apparatus of claim 10, further comprising a storage unit for storing one of the wide-angle image, the centralized monitoring image, the panorama image, and a combination thereof.

16. The monitoring camera apparatus of claim 10, further comprising:

    an image input terminal for receiving the centralized monitoring image from the centralized monitoring imaging unit; and
    a serial communication unit for transmitting the control signal to the centralized monitoring imaging unit,
wherein the centralized monitoring imaging unit is an independent unit located outside the monitoring camera apparatus.

**17.** The monitoring camera apparatus of claim 16, wherein the serial communication unit is used when the control and signal-processing unit receives a unit control signal from the remote control apparatus.

**18.** The monitoring camera apparatus of claim 16, wherein when panning/tilting control signals regarding the centralized monitoring imaging unit are received, the control and signal-processing unit transmits the panning/tilting control signals prior to a control signal corresponding to the location information of the moving object to the centralized monitoring imaging unit.

**19.** The monitoring camera apparatus of claim 16, further comprising a signal conversion unit for receiving an analog centralized monitoring image from the centralized monitoring imaging unit through the image input terminal and generating a digital centralized monitoring image, wherein the image combination unit combines a digital panorama image and the digital centralized monitoring image.

**20.** The monitoring camera apparatus of claim 16, wherein the centralized monitoring imaging unit is connected in plurality to the monitoring camera apparatus.

**21.** The monitoring camera apparatus of claim 20, wherein the control signal that the control and signal-processing unit transmits to the centralized monitoring imaging unit comprises reception unit identification information.

**22.** The monitoring camera apparatus of claim 16, wherein an optical axis of a wide-angle lens of the wide-angle image unit is aligned with a panning central axis of the centralized monitoring imaging unit.

**23.** The monitoring camera apparatus of claim 10, wherein the centralized monitoring imaging unit is disposed in the monitoring camera apparatus.

**24.** The monitoring camera apparatus of claim 23, wherein the wide-angle imaging units are symmetrically disposed in plurality on an outer circumferential surface of the monitoring camera apparatus.

**25.** The monitoring camera apparatus of claim 24, wherein the control and signal-processing unit detects a moving object from each of a plurality of wide-angle images acquired by the plurality of wide-angle imaging units.

**26.** The monitoring camera apparatus of claim 24, wherein the panorama image construction unit extracts a certain region from each of the plurality of wide-angle images, and combines the extracted regions to construct the panorama image.

**27.** A remote monitoring system for selectively and intensively photographing a target area, comprising:

at least one slave camera capable of panning/tilting/zooming operation;
a master camera for acquiring a wide-angle image regarding the target area, detecting a location of a moving object from the wide-angle image, driving the slave camera according to the location of the moving object to control the slave camera to photograph the moving object, acquiring a centralized monitoring image from the slave camera, and constructing an output image based on the wide-angle image and the centralized monitoring image; and
a remote control apparatus for displaying the output image on a monitor and remotely controlling the master camera.

**28.** The remote monitoring system of claim 27, wherein the master camera supplies a control signal according to location information of one image sector associated with the moving object among a plurality of image sectors constituting the wide-angle image to control the slave camera.

**29.** The remote monitoring system of claim 27, wherein the master camera comprises:

a panorama image construction unit for constructing a panorama image from the wide-angle image;
an image combination unit for combining the panorama image and the centralized monitoring image received from the centralized monitoring imaging unit; and
a signal transmission unit for transmitting the combined image to the remote control apparatus as the output image.

**30.** In a monitoring camera apparatus that comprises a wide-angle imaging unit and is configured to acquire a monitoring image to be displayed on a remote control apparatus and control a centralized monitoring imaging unit without assistance of the remote control apparatus, a method of acquiring a monitoring image, comprising:

acquiring, by the wide-angle imaging unit, a wide-angle image regarding a target area;
detecting a location of a moving object from the wide-angle image and generating a control signal corresponding to information on the location of the moving object;
providing the control signal to the centralized monitoring imaging unit to control the centralized monitoring imaging unit to photograph the moving object and receiving a centralized monitoring image acquired by the centralized monitoring imaging unit; and

transmitting the monitoring image comprising the centralized monitoring image to the remote control apparatus.

**31.** The method of claim 30, wherein the centralized monitoring imaging unit is an independent unit that is located outside the monitoring camera apparatus.

**32.** The method of claim 30, wherein the centralized monitoring imaging unit is disposed in the camera apparatus.

**33.** The method of claim 30, wherein the detecting of the location of the moving object comprises:

dividing the wide-angle image into a plurality of image sectors;

comparing a previously-photographed wide-angle image and a current wide-angle image by unit of the plurality of image sectors;

calculating the number of pixels of each image sector, in which a variation of a pixel value is greater than a first reference value; and

determining location information of an image sector whose calculation value is equal to or greater than a second reference value as location information of the moving object.

**34.** The method of claim 33, wherein the determining of the location information of the image sector comprises determining location information of an image sector having a maximum calculation value of the variation of the pixel value as the location information of the moving object when the calculation value is equal to or greater than the second reference value in two or more image sectors adjacent to each other.

**35.** The method of claim 30, wherein the detecting of the location of the moving object comprises:

dividing the wide-angle image into a plurality of image sectors;

comparing a previously-photographed wide-angle image and a current wide-angle image by unit of the plurality of image sectors to detect the moving object; and

determining location information of an image sector to which a specific coordinate of the moving object pertains as the location information of the moving object.

**36.** The method of claim 30, wherein the detecting of the location of the moving object comprises:

detecting the moving object in the wide-angle image;

determining a location of a central point of the moving object in a form of polar coordinate; and

determining panning/tilting control values regarding the centralized monitoring imaging unit according to the polar coordinate to generate the control signal.

**37.** The method of claim 34, further comprising:

determining a size of the moving object; and additionally generating a zoom ratio control value corresponding to the size as the control signal.

## FIG. 1

*Fig. 2*

## FIG. 3

```
FOCUSING LENS    170     M 180    PANNING MOTOR DRIVER    182                CONTROL UNIT    192

                         M 184    TILTING MOTOR DRIVER    186

IMAGE SENSOR     172     M 188    ZOOM MOTOR DRIVER       190

SIGNAL CONVERSION UNIT   176                                                 SERIAL COMMUNICATION UNIT    194

                  196                                                        198
```

TO MASTER CAMERA (12)                    TO/FROM MASTER CAMERA (12)

20

## FIG. 4

P1  P2  P3  P4

200

P2 — P3 — P2

FORWARD PANORAMA IMAGE          BACKWARD PANORAMA IMAGE

P1 — P4 — P1

212          210          214

# FIG. 5

CENTRALIZED MONITORING IMAGE — 220

PANORAMA IMAGE — 210

CENTRALIZED MONITORING IMAGE — 220

200

FORWARD PANORAMA IMAGE — 212

BACKWARD PANORAMA IMAGE — 214

# FIG. 6

START

**300**
ACQUIRE WIDE-ANGLE IMAGE

**302**
MOVING OBJECT DETECTED? — NO

YES

**304**
CONTROL PANNING/TILTING OF SLAVE CAMERA

**306**
ACQUIRE CENTRALIZED MONITORING IMAGE INCLUDING MOVING OBJECT

**308**
PRECISELY TRACK MOVING OBJECT BASED ON CENTRALIZED MONITORING IMAGE

**310**
CONSTRUCT OUTPUT IMAGE

**312**
GENERATE AND TRANSMIT COMPOSITE VIDEO SIGNAL TO REMOTE MONITOR/CONTROL APPARATUS

END

## FIG. 7

210   212

## FIG. 8

| SECTOR CODE | MOTION CALCULATION VALUE | TRACKING | PRIORITY |
|---|---|---|---|
| 000 | 21 | N | |
| 001 | 67 | Y | 1 |
| ⋮ | ⋮ | ⋮ | ⋮ |
| *** | 12 | N | |

MOVING OBJECT TABLE   322

| SECTOR CODE | SLAVE CAMERA ID | PANNING VALUE | TILTING VALUE |
|---|---|---|---|
| 000 | 00 | 20.0 | 32.6 |
| 001 | 00 | 18.8 | 31.8 |
| ⋮ | ⋮ | ⋮ | ⋮ |
| *** | 00 | 21.9 | -32.6 |

CONTROL VALUE LUT   320

## FIG. 9

CONTROL VALUE LUT

| PRESET CODE | PANNING VALUE | TILTING VALUE |
|---|---|---|
| PRESET_000 | 20.0 | 32.6 |
| PRESET_001 | 18.8 | 31.8 |
| ⋮ | ⋮ | ⋮ |
| *** | 21.9 | -32.6 |

320b

200

SLAVE CAMERA

20

10

| 110 | 122 | 130 | 132 |
|---|---|---|---|
| IMAGING UNIT | MOTION DETECTION UNIT | CONTROL UNIT | SERIAL COMMUNICATION UNIT |

| SECTOR CODE | MOTION CALCULATION VALUE | TRACKING | PRIORITY |
|---|---|---|---|
| 000 | 21 | N | |
| 001 | 67 | Y | 1 |
| ⋮ | ⋮ | ⋮ | ⋮ |
| *** | 12 | N | |

MOVING OBJECT TABLE

322

| SECTOR CODE | SLAVE CAMERA ID | PRESET CODE |
|---|---|---|
| 000 | 00 | PRESET_000 |
| 001 | 00 | PRESET_001 |
| ⋮ | ⋮ | ⋮ |
| *** | 00 | *** |

CAMERA LUT

320a

# FIG. 10

| OBJECT ID | COORDINATE OF CENTER POINT | OBJECT SIZE | TRACKING | PANNING VALUE | TILTING VALUE | ZOOM RATIO | PRIORITY |
|---|---|---|---|---|---|---|---|
| MDE_000 | (32, 217) | (2, 4) | N | 217 | -38 | 8 | 2 |
| MDE_001 | (25,45) | (15, 30) | Y | 45 | -44 | 3 | 1 |
| ⋮ | ⋮ | ⋮ | ⋮ | | | | |
| MDE_xxx | (180, 316) | (3,2) | N | 316 | -1 | 7 | 3 |

MOVING OBJECT TABLE

FIG. 11

## FIG. 12

$$y = f\,x$$

## FIG. 13

## FIG. 14

TRACKING TABLE

| OBJECT ID | MOVEMENT HISTORY |
|-----------|------------------|
| MDE_003 | SECTOR_001 – SECTOR_005 –SECTOR_010 – SECTOR_015 |
| MDE_008 | SECTOR_012 – SECTOR_013 |
| ⋮ | ⋮ |
| MDE_xxx | SECTOR_217 |

330

## FIG. 15

## FIG. 16

## FIG. 17

## FIG. 18

## FIG. 19

FIG. 20

## FIG. 21

# FIG. 22

PTZ CAMERA — 20

150    152

— 10c

WIDE-ANGLE LENS — 112

FIRST SIGNAL CONVERSION UNIT — 126

IMAGE SENSOR — 114

ANALOG IMAGE SIGNAL

IMAGE STORAGE UNIT — 128

DIGITAL IMAGE SIGNAL

110

120

MOTION DETECTION UNIT — 122

CONTROL UNIT — 130

SERIAL COMMUNICATION UNIT — 132

160

REMOTE MONITOR/ CONTROL APPARATUS — 40

PANORAMA IMAGE CONSTRUCTION UNIT — 124

SECOND SIGNAL CONVERSION UNIT — 140

IMAGE COMBINATION UNIT — 134

162

## FIG. 23

## FIG24

**FIG. 25**

**FIG. 26**

## FIG. 27

## FIG. 28

# FIG. 29

# FIG. 30

## FIG. 31

## FIG. 32

## FIG33

## FIG. 34

## FIG. 35

## FIG. 36

## FIG. 37

## FIG. 38

## FIG. 39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 663483
- KR 1020090015311

- KR 20050103597